# EUROPEAN PATENT APPLICATION

(11) **EP 1 132 813 A2**
(43) Date of publication of application: **12.09.2001**
(21) Application number: 01300675.4
(22) Date of filing: 25.01.2001
(51) Int. Cl.: G06F 9/46, G06F 9/50

(54) **Computer with high-speed context switching**

(30) Priority: 29.02.2000 JP 2000054742; 29.02.2000 JP 2000054832; 31.03.2000 JP 2000099707
(71) Applicant: FUJITSU LIMITED, Kawasaki-shi, Kanagawa 211-8588 (JP)
(72) Inventor: Miyake, Hideo, c/o Fujitsu Ltd., Kawasaki-shi, Kanagawa 211-8588 (JP); Suga, Atsuhiro, c/o Fujitsu Ltd., Kawasaki-shi, Kanagawa 211-8588 (JP); Nakamura, Yasuki, c/o Fujitsu Ltd., Kawasaki-shi, Kanagawa 211-8588 (JP); Tsuji, Masayuki, c/o Fujitsu Ltd., Kawasaki-shi, Kanagawa 211-8588 (JP); Yamazaki, Yasuhiro, c/o Fujitsu Ltd., Kawasaki-shi, Kanagawa 211-8588 (JP); Takebe, Yoshimasa, c/o Fujitsu Ltd., Kawasaki-shi, Kanagawa 211-8588 (JP); Sato, Taizo, c/o Fujitsu Ltd., Kawasaki-shi, Kanagawa 211-8588 (JP); Tago, Shinichiro, c/o Fujitsu Ltd., Kawasaki-shi, Kanagawa 211-8588 (JP)
(74) Representative: Stebbing, Timothy Charles

(57) **Abstract**

A computer which performs parallel processing of a plurality of programs in a time-division fashion includes hardware resources divided into a plurality of areas, an evacuation unit which records identification information identifying a first program, and evacuates information stored in an area of said plurality of areas if the area is necessary for execution of a second program and is being used for execution of the first program, and a restoration unit which restores the evacuated information to the area based on the identification information when the second program comes to a halt or to an end.

## Description

### BACKGROUND OF THE INVENTION

### 1. Field of the Invention

The present invention generally relates to a computer executing programs and a method of controlling the execution.

### 2. Description of the Related Art

When it is desired for computers to execute various processes, processing systems may be configured to attend to parallel processing by switching a plurality of task programs in a time-division fashion, thereby achieving efficient processing. Such processing systems are referred to as multi-task processing systems, and an OS (operating system) provided with functions of parallel processing is called a multi-task OS.

In a multi-task OS, information stored in hardware resources such as a program counter and general-purpose registers of the computer is maintained with respect to each task program. Since the hardware resources are used together with the running computer task, hardware-resource related information on task programs that are not running at a given time is stored in the memory.

Such hardware-resource-related information is referred to as a "context". Operation that moves the context from the hardware resources to the memory is referred to as "context evacuation", and operation that moves the context from the memory to the hardware resources is called "context restoration". "Context evacuation" and "context restoration" are collectively called "context switch".

In what follows, a related-art computer will be described.

Table 1 given below shows an example of context objects that store contexts therein in the related-art computer.

**Table 1**

| Register Name |
|---|
| EPCR |
| EPSR |
| COND |
| GR |
| FR |

The context objects shown above will be described in detail in the following.

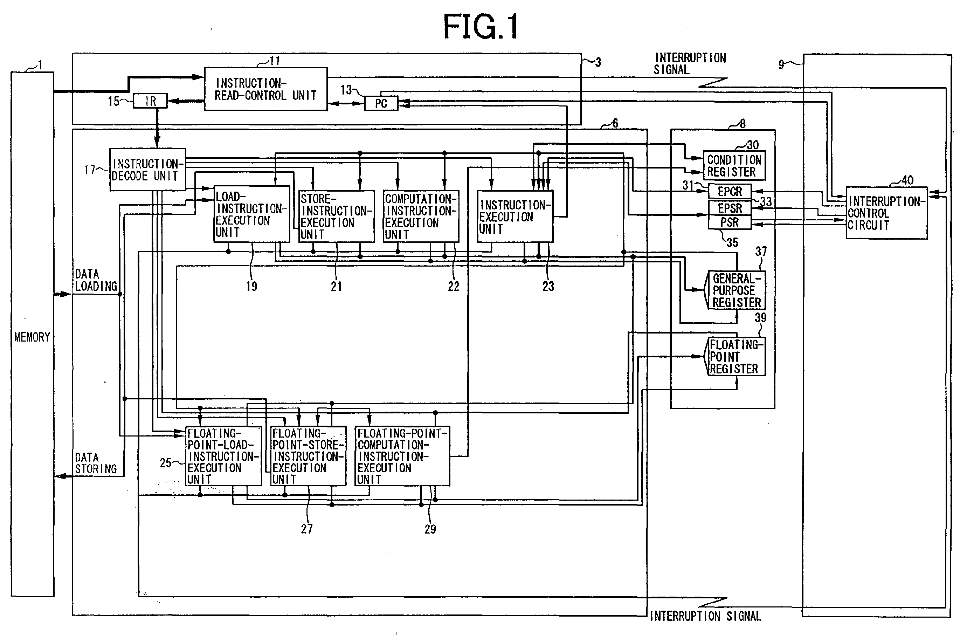

Fig.1 is a block diagram of a related-art computer that includes a general-purpose register (GR) and a floating-point register (FR). As shown in Fig.1, the computer includes a memory 1, an instruction-fetch unit 3 connected to the memory 1, an instruction-execution unit 6 connected to the memory 1 and the instruction-fetch unit 3, and a register-control unit 8 connected to the instruction-execution unit 6, and an interruption-control unit 9 connected to the instruction-fetch unit 3, the instruction-execution unit 6, and the register-control unit 8.

The instruction-fetch unit 3 includes an instruction-read-control unit 11, a program counter (PC) 13, and an instruction register (IR) 15. The instruction-read-control unit 11 is connected to the memory 1, and the program counter 13 is connected to the instruction-read-control unit 11. The instruction register 15 is connected to the instruction-read-control unit 11.

The instruction-execution unit 6 includes an instruction-decode unit 17, a load-instruction-execution unit 19, a store-instruction-execution unit 21, a computation-instruction-execution unit 22, an instruction-execution unit 23, a floating-point-load-instruction-execution unit 25, a floating-point-store-instruction-execution unit 27, and a floating-point-computation-instruction-execution unit 29.

The instruction-decode unit 17 is connected to the instruction register 15, and the load-instruction-execution unit 19 is connected to the memory 1 and the instruction-decode unit 17. The store-instruction-execution unit 21 is connected to the instruction-decode unit 17 and a general-purpose register (GR) 37. The computation-instruction-execution unit 22 is connected to the instruction-decode unit 17, the general-purpose register 37, and a condition register 30. The instruction-execution unit 23 is connected to the instruction-decode unit 17, the general-purpose register 37, and registers 31, 33, and 35.

The floating-point-load-instruction-execution unit 25 is connected to the memory 1 and the instruction-decode unit 17. The floating-point-store-instruction-execution unit 27 and the floating-point-computation-instruction-execution unit 29 are connected to the instruction-decode unit 17 and a floating-point register 39.

The register-control unit 8 includes the condition register 30, the EPCR register 31, the EPSR register 33, the PSR register 35, the general-purpose register 37, and the floating-point register 39. The condition register 30 is connected to the computation-instruction-execution unit 22, the instruction-execution unit 23, and the floating-point-computation-instruction-execution unit 29. The EPCR register 31, the EPSR register 33, and the PSR register 35 are all connected to an interruption-control circuit 40. The general-purpose register 37 is connected to the load-instruction-execution unit 19, the store-instruction-execution unit 21, and the instruction-execution unit 23. The floating-point register 39 is connected to the floating-point-load-instruction-execution unit 25, the floating-point-store-instruction-execution unit 27, and the floating-point-computation-instruction-execution unit 29.

The interruption-control unit 9 includes the interruption-control circuit 40. The interruption-control circuit 40 is connected to the instruction-read-control unit 11, the program counter 13, the load-instruction-execution unit 19, the store-instruction-execution unit 21, the computation-instruction-execution unit 22, the instruction-execution unit 23, the floating-point-load-instruction-execution unit 25, the floating-point-store-instruction-execution unit 27, and the floating-point-computation-instruction-execution unit 29.

In the computer having a configuration as described above, the instruction-fetch unit 3 reads instructions from the memory 1 as the program counter 13 points to these instructions, and supplies these instructions to the instruction-execution unit 6 via the instruction register 15. The instruction-read-control unit 11 stores a branch address in the program counter 13 when the branch address is supplied from the instruction-execution unit 6 or the interruption-control circuit 40 attending to interruption processing. Otherwise, the instruction-read-control unit 11 increments the program counter 13 indicative of an instruction address to be read, thereby supplying the next instruction to the instruction-execution unit 6. The instruction-read-control unit 11 supplies an interruption signal to the interruption-control circuit 40 if interruption is detected during fetching of instructions.

The instruction-decode unit 17 decodes instructions supplied from the instruction register 15. The instruction-decode unit 17 supplies load instructions to the load-instruction-execution unit 19, store instructions to the store-instruction-execution unit 21, computation instructions to the computation-instruction-execution unit 22, floating-point-load instructions to the floating-point-load-instruction-execution unit 25, floating-point-store instructions to the floating-point-store-instruction-execution unit 27, floating-point-computation instructions to the floating-point-computation-instruction-execution unit 29, and other instructions such as interruption-return instructions to the instruction-execution unit 23.

The load-instruction-execution unit 19 reads data from the memory 1 at addresses that correspond to effective addresses obtained from the data read from the general-purpose register 37 when the load instructions are supplied, and writes the loaded data in the general-purpose register 37. If interruption is detected during the execution of load instructions, an interruption signal is supplied to the interruption-control circuit 40.

By the same token, the store-instruction-execution unit 21 reads data from the general-purpose register 37 at addresses that correspond to effective addresses obtained from the data read from the general-purpose register 37 when the store instructions are supplied, and writes the data in the memory 1 at the addresses corresponding to effective addresses. If interruption is detected during the execution of store instructions, an interruption signal is supplied to the interruption-control circuit 40.

In response to computation instructions, the computation-instruction-execution unit 22 attends to computation based on data read from the general-purpose register 37, and writes results of the computation in the general-purpose register 37. In response to comparison instructions, the computation-instruction-execution unit 22 compares two values read from the general-purpose register 37. If the two values are identical, data indicative of a true status is stored in the condition register 30. If the two values are not identical, data indicative of a false status is stored in the condition register 30.

In response to floating-point-load instructions, the floating-point-load-instruction-execution unit 25 reads data from the memory 1 at addresses that correspond effective addresses obtained from data read from the general-purpose register 37, and stores the loaded data in the floating-point register 39. If interruption is detected during the execution of floating-point-load instructions, an interruption signal is supplied to the interruption-control circuit 40.

When floating-point-store instructions are supplied, the floating-point-store-instruction-execution unit 27 reads data from the floating-point register 39 at addresses that correspond to effective addresses obtained from the data read from the general-purpose register 37, and writes the data in the memory 1 at the addresses corresponding to effective addresses. If interruption is detected during the execution of floating-point-store instructions, an interruption signal is supplied to the interruption-control circuit 40.

In response to floating-point-computation instructions, the floating-point-computation-instruction-execution unit 29 attends to computation based on data read from the floating-point register 39, and writes results of the computation in the floating-point register 39. In response to floating-point-comparison instructions, the floating-point-computation-instruction-execution unit 29 compares two values read from the floating-point register 39. Then, data indicative of a true status or a false status depending on whether the two values are identical or not is stored in the condition register 30.

When a branch instruction is supplied from the instruction-decode unit 17, the instruction-execution unit 23 supplies a branch-destination address to the program counter 13 at the time when branching is confirmed. When a conditional branch instruction is supplied from the instruction-decode unit 17, the instruction-execution unit 23 supplies a branch-destination address to the program counter 13 if the condition register 30 has a value stored therein indicative of a true status. By the same token, when an interruption-return instruction is supplied, data indicative of operation statuses before the interruption is stored in the PSR register 35. Further, a returning instruction address is read from the EPCR register 31, and is supplied to the program counter 13 as a branch-destination address. If interruption is detected during the execution of instructions described above, an interruption signal is supplied to the interruption-control circuit 40.

The condition register 30 stores therein data indicative of a true status or a false status in accordance with the results of comparison instruction. The contents of the condition register 30 are referred to by conditional branch instructions. The EPCR register 31 stores therein an address of an instruction that is to be executed upon return from interruption. This address is set at the time of start of interruption. The PSR register 35 stores therein data indicative of operation statuses. The EPSR register 33 stores therein data indicative of operation statuses that are in existence prior to occurrence of interruption, and are set at the time of start of interruption.

In response to an interruption signal supplied from the instruction-fetch unit 3 or from the instruction-execution unit 6, the interruption-control circuit 40 stores in the EPCR register 31 the address of an instruction to be executed upon return from interruption. Further, the interruption-control circuit 40 stores in the EPSR register 33 data indicative of operation statuses prior to the interruption, and stores in the PSR register 35 data of operation statuses corresponding to the interruption. Further, the branch-destination address of the interruption is supplied in the instruction-fetch unit 3.

As described above, during normal or default operation of the computer, the instruction-fetch unit 3 reads an instruction indicated by the program counter 13, and supplies the instruction to the instruction-execution unit 6. The instruction-execution unit 6 executes the supplied instruction.

When interruption takes place, the interruption-control circuit 40 stores respective data in the EPCR register 31, the EPSR register 33, and the PSR register 35 in response to the interruption signal supplied from the instruction-fetch unit 3 or from the instruction-execution unit 6. Further, the interruption-control circuit 40 supplies a branch-destination address to the instruction-fetch unit 3 in accordance with the interruption. In response to the branch-destination address supplied from the interruption-control unit 9, the instruction-fetch unit 3 reads an instruction, and supplies the instruction to the instruction-execution unit 6. Thereafter, operation the same as normal operation will be performed.

When a return from interruption is to be made, the instruction-execution unit 6 executes an interruption-return instruction, thereby writing the data of the EPSR register 33 in the PSR register 35. Further, the instruction-execution unit 6 reads data from the EPCR register 31, and supplies the data to the instruction-fetch unit 3 as a branch-destination address. The instruction-fetch unit 3 reads an instruction from the branch-destination address supplied from the instruction-execution unit 6, and supplies the instruction to the instruction-execution unit 6. Thereafter, normal and routine operations are performed.

In the following, context-switch operation by the computer described above will be described.

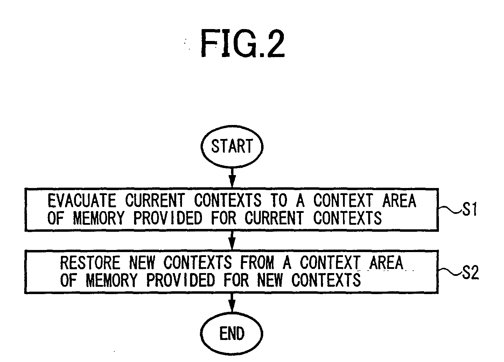

Fig.2 is a flowchart of the context-switch operation.

As shown in Fig.2, at a step S1, current contexts are evacuated to a context area of the memory 1 provided for the current contexts. At a step S2, new contexts are restored from a context area of the memory 1 provided for the new contexts. This brings the context-switch procedure to an end.

The description provided above delineates a summary of the configuration and operation of the related-art computer. It is a recent and general trend in computers that, in order to achieve higher speed and greater performance, general-purpose registers in computers have been increasing in number, and the size of information stored in hardware resources have also been increasing. In such circumstances, it requires a significant amount of processing time to evacuate and restore all the contexts without exception. This hinders an effort to improve performance of computers.

Accordingly, there is a need for a computer and a method of controlling the computer in which efficiency of parallel processing is improved by making context switching faster.

### SUMMARY OF THE INVENTION

Accordingly, it is a general object of the present invention to provide a computer and a method of controlling the computer that substantially obviate one or more of the problems caused by the limitations and disadvantages of the related art.

It is another and more specific object of the present invention to provide a computer and a method of controlling the computer in which efficiency of parallel processing is improved by making context switching faster.

In order to achieve the above objects according to the present invention, a computer which performs parallel processing of a plurality of programs in a time-division fashion includes hardware resources divided into a plurality of areas, an evacuation unit which records identification information identifying a first program, and evacuates information stored in an area of said plurality of areas if the area is necessary for execution of a second program and is being used for execution of the first program, and a restoration unit which restores the evacuated information to the area based on the identification information when the second program comes to a halt or to an end.

According to the computer as described above, the information stored in the area is evacuated, and is later restored in accordance with the identification information. This can achieve high speed switching of contexts.

Other objects and further features of the present invention will be apparent from the following detailed description when read in conjunction with the accompanying drawings.

### BRIEF DESCRIPTION OF THE DRAWINGS

Fig.1 is a block diagram of a related-art computer that includes a general-purpose register and a floating-point register;
Fig.2 is a flowchart of context-switch operation;
Fig.3 is a block diagram of a computer according to a first embodiment of the present invention;
Fig.4 is a flowchart of a context-switch operation performed by the computer of the first embodiment shown in Fig.3;
Fig.5 is a flowchart of the context-switch operation;
Fig.6 is a flowchart of an interruption operation performed by the computer of the first embodiment shown in Fgi.3 when a desired context is not available;
Fig.7 is a flowchart of an operation performed when a desired context is not available;
Fig.8 is a circuit diagram showing a configuration of a first detection unit;
Fig.9 is a circuit diagram showing a second detection unit;
Fig.10 is a circuit diagram showing a third detection unit;
Fig.11 is a block diagram of a computer according to a second embodiment of the present invention;
Fig.12 is a circuit diagram showing a configuration of a fourth detection unit;
Fig.13 is a circuit diagram showing a fifth detection unit;
Fig.14 is a circuit diagram showing a sixth detection unit;
Fig.15 is a block diagram of a computer according to a third embodiment of the present invention;
Fig.16 is a flowchart of a context-switch operation performed by the computer of the third embodiment;
Fig.17 is a flowchart showing an interruption operation performed when desired contexts are not available;
Fig.18 is a block diagram of a computer according to a fourth embodiment of the present invention;
Fig.19 is a block diagram of a computer according to a fifth embodiment of the present invention;
Fig.20 is a circuit diagram showing a seventh detection unit;
Fig.21 is a circuit diagram showing an eighth detection unit;
Fig.22 is a block diagram of a pipeline processing apparatus;
Fig.23 is a time chart showing operation of a pipeline processing apparatus;
Fig.24 is a block diagram of a first embodiment of a pipeline processing apparatus according to the present invention;
Fig.25 is a time chart showing an example of operation of the pipeline processing apparatus of Fig.24;
Fig.26 is a block diagram of a second embodiment of a pipeline processing apparatus according to the present invention;
Fig.27 is a block diagram of a third embodiment of a pipeline processing apparatus according to the present invention;
Fig.28 is a block diagram of a recursive-type divider having a base number of 4;
Fig.29 is a table showing logic computation by a result-selection logic circuit;
Fig.30 is a circuit diagram showing a circuit configuration of a carry save adder along with a circuit configuration of a full adder; and
Fig.31 is an illustrative drawing for explaining operation of full-adder circuits with reference to computation based on paper and a pencil.

### DESCRIPTION OF THE PREFERRED EMBODIMENTS

In the following, embodiments of the present invention according to a first principle will be described with reference to the accompanying drawings. Through these figures, the same elements are referred to by the same numerals.

In the following description, hardware resources serving as context objects are divided into a plurality of areas, and each area is referred to as a "context block". Among the plurality of context blocks, one or more predetermined context blocks used as a basis are referred to as a "basic context block".

### [FIRST EMBODIMENT]

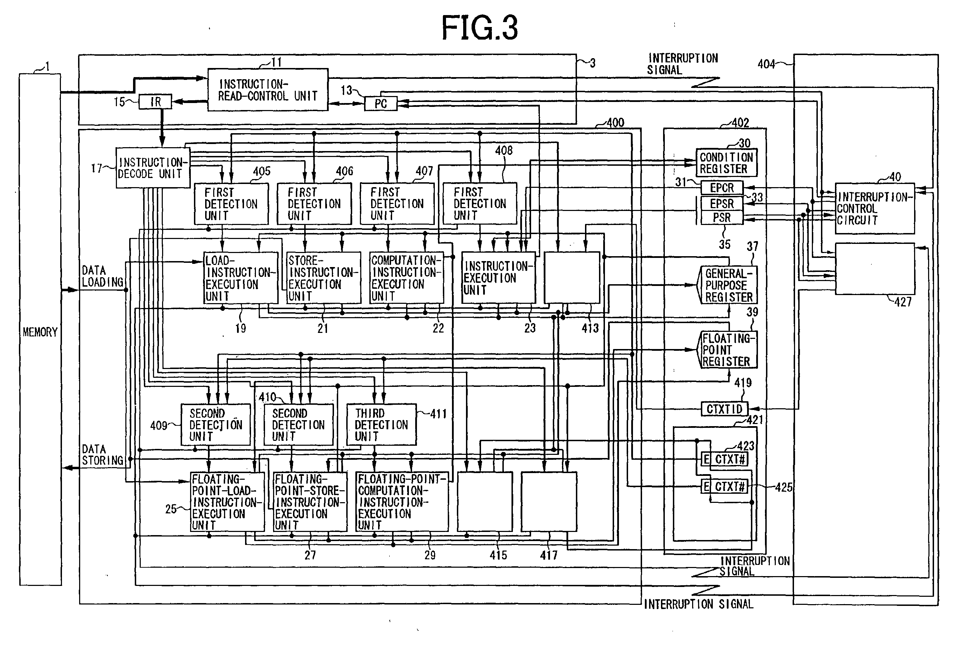

Fig.3 is a block diagram of a computer according to a first embodiment of the present invention. Context objects of the computer shown in Fig.3 are shown in Table 2 provided below.

**Table 2**

| Context Block No. | Register Name | Basic Context Block |
|---|---|---|
| 0 | EPCR | x |
| | EPSR | |
| | COND | |
| | GR | |
| 1 | FR | |

Registers having the context block No. 0 shown in Table 2 stores basic context blocks.

As shown in Fig.3, the computer according to the first embodiment of the present invention differs from the related-art computer of Fig.1 in that an instruction-execution unit 400 includes first detection units 405 through 408, second detection units 409 and 410, a third detection unit 411, a switch-context-block-read-instruction-execution unit 413, a context-block-control-table-read-instruction-execution unit 415, and a context-block-control-table-write-instruction-execution unit 417. Further, a register-control unit 402 includes a context-block-identification register 419, and a context-block-control table 421. The context-block-control table 421 includes context-control-table entries 423 and 425.

A further difference is that an interruption-control unit 404 includes an unusable-context-interruption-control unit 427.

In this configuration, the first detection units 405 through 408 have input terminals thereof connected to the instruction-decode unit 17 and to the context-control-table entry 423, and have output terminals thereof connected to the unusable-context-interruption-control unit 427. Further, another output terminal of the first detection unit 405 is connected to the load-instruction-execution unit 19, and another output terminal of the first detection unit 406 is connected to the store-instruction-execution unit 21. Moreover, another output terminal of the first detection unit 407 is connected to the computation-instruction-execution unit 22, and another output terminal of the first detection unit 408 is connected to the instruction-execution unit 23.

The second detection units 409 and 410 have input terminals thereof connected to the instruction-decode unit 17 and to the context-control-table entries 423 and 425, and have output terminals thereof connected to the unusable-context-interruption-control unit 427. Another output terminal of the second detection unit 409 is connected to the floating-point-load-instruction-execution unit 25, and another output terminal of the second detection unit 410 is connected to the floating-point-store-instruction-execution unit 27. The third detection unit 411 has input terminals thereof connected to the instruction-decode unit 17 and to the context-control-table entry 425, and has output terminals thereof connected to the unusable-context-interruption-control unit 427 and to the floating-point-computation-instruction-execution unit 29.

The switch-context-block-read-instruction-execution unit 413 has input terminal thereof connected to the instruction-decode unit 17 and to the context-block-identification register 419, and has output terminal thereof connected to the general-purpose register 37 and to the interruption-control circuit 40.

The context-block-control-table-read-instruction-execution unit 415 has input terminals thereof connected to the instruction-decode unit 17 and to the context-control-table entries 423 and 425, and has output terminals thereof connected to the general-purpose register 37 and to the interruption-control circuit 40. The context-block-control-table-write-instruction-execution unit 417 has input terminals thereof connected to the instruction-decode unit 17 and to the general-purpose register 37, and has output terminals thereof connected to the general-purpose register 37, the context-control-table entries 423 and 425, and the interruption-control circuit 40.

The context-block-identification register 419 has the input terminal thereof connected to the unusable-context-interruption-control unit 427, and has the output terminal thereof connected to the switch-context-block-read-instruction-execution unit 413. The unusable-context-interruption-control unit 427 has input terminals thereof connected to the program counter 13 and to the PSR register 35, and has output terminals thereof connected to the EPCR register 31, the EPSR register 33, and the PSR register 35.

In what follows, operation of the computer having a configuration as described above will be described.

The instruction-decode unit 17 supplies load instructions to the first detection unit 405, store instructions to the first detection unit 406, and computation and comparison instructions to the first detection unit 407. Further, the first detection unit 408 receives branch instructions, conditional branch instructions, and interruption-return instructions.

Moreover, the instruction-decode unit 17 supplies floating-point-load instructions to the second detection unit 409, and supplies floating-point-store instructions to the second detection unit 410. The third detection unit 411 receives floating-point-computation instructions and floating-point-comparison instructions.

Furthermore, the instruction-decode unit 17 supplies switch-context-block-read instructions to the switch-context-block-read-instruction-execution unit 413, context-block-control-table-read instructions to the context-block-control-table-read-instruction-execution unit 415, and context-block-control-table-write instructions to the context-block-control-table-write-instruction-execution unit 417.

The first detection units 405 through 408 each check whether a register referenced or modified in execution of a supplied instruction is designated as a current context. If the E field of the context-control-table entry 423 has a value "0" stored therein, and if a supplied instruction is to refer to or modify the general-purpose register 37, an interruption signal is supplied to the unusable-context-interruption-control unit 427.

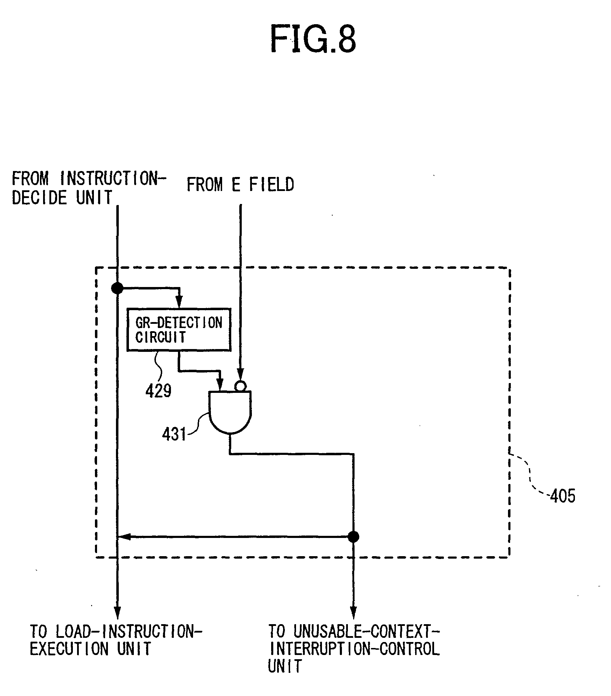

The first detection units 405 through 408 each have substantially the same configuration. Fig.8 is a circuit diagram showing a configuration of the first detection unit 405. As shown in Fig.8, the first detection unit 405 includes a GR-detection circuit 429 and a logic circuit 431. The GR-detection circuit 429 checks whether it is necessary to refer to or modify the general-purpose register 37 during a load instruction to be executed.

A load instruction supplied from the instruction-decode unit 17 is let pass to be output to the load-instruction-execution unit 19, and, also, is input to the GR-detection circuit 429. The output of the GR-detection circuit 429, along with the value of the E field of the context-control-table entry 423, is supplied to the logic circuit 431. The output signal of the logic circuit 431 is supplied to the load-instruction-execution unit 19 and to the unusable-context-interruption-control unit 427.

The second detection units 409 and 410 each have substantially the same configuration, and check whether a register referenced or modified in execution of the supplied instruction is designated as a current context. If the E field of the context-control-table entry 423 has a value "0" stored therein, and if a supplied instruction is to refer to or modify the general-purpose register 37, an interruption signal is supplied to the unusable-context-interruption-control unit 427. Further, if the E field of the context-control-table entry 425 has a value "0" stored therein, and if a supplied instruction is to refer to or modify the floating-point register 39, an interruption signal is supplied to the unusable-context-interruption-control unit 427.

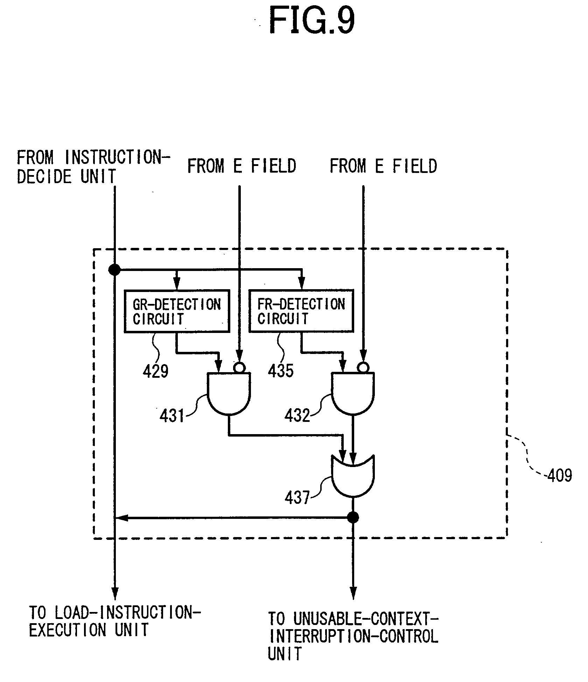

Fig.9 is a circuit diagram showing the second detection unit 409. As shown in Fig.9, the second detection unit 409 includes the GR-detection circuit 429, an FR-detection circuit 435, a GR-detection circuit 429, an FR-detection circuit 435, logic circuits 431 and 432, and an OR circuit 437. The FR-detection circuit 435 checks whether a floating-point-load instruction to be executed requires reference to or alteration to the floating-point register 39.

A floating-point-load instruction supplied from the instruction-decode unit 17 is let pass through the second detection unit 409 to be supplied to the floating-point-load-instruction-execution unit 25, and, also, is supplied to the GR-detection circuit 429 and the FR-detection circuit 435. An output of the GR-detection circuit 429 together with the E-field value of the context-control-table entry 423 is supplied to the logic circuit 431. Further, an output of the FR-detection circuit 435 along with the E-field value of the context-control-table entry 425 is provided to the logic circuit 432.

The output signals of the logic circuits 431 and 432 are both supplied to the OR circuit 437. An output signal of the OR circuit 437 is provided to the unusable-context-interruption-control unit 427 and to the floating-point-load-instruction-execution unit 25.

The third detection unit 411 checks whether the supplied instruction to be executed refers to or alters a register that is a current context. If the E field of the context-control-table entry 425 stores therein "0", and a supplied instruction is to refer to or alter the floating-point register 39, an interruption signal is sent to the unusable-context-interruption-control unit 427.

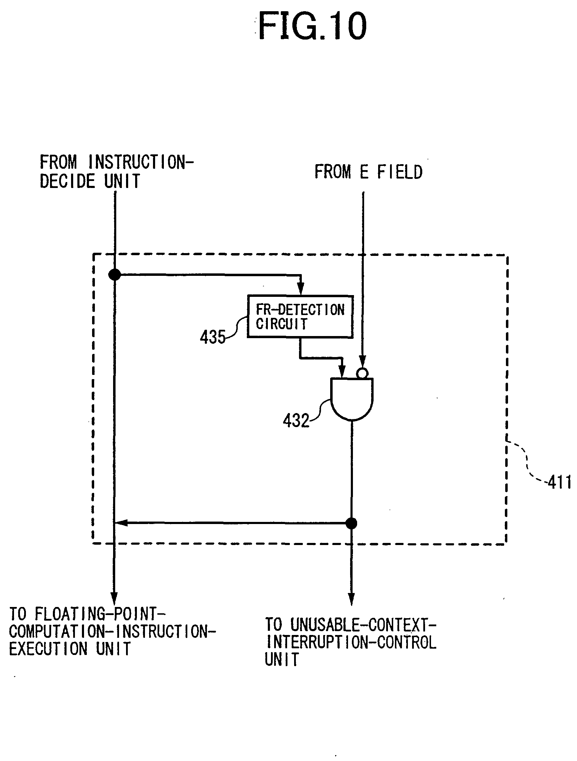

Fig.10 is a circuit diagram showing the third detection unit 411. The third detection unit 411 includes the FR-detection circuit 435 and the logic circuit 432. A floating-point-load instruction supplied from the instruction-decode unit 17 is let pass through the third detection unit 411 to be supplied to the floating-point-computation-instruction-execution unit 29, and, also, is supplied to the FR-detection circuit 435. An output of the FR-detection circuit 435 along with the E-field value of the context-control-table entry 425 is provided to the logic circuit 432. An output signal of the logic circuit 432 is supplied to the floating-point-computation-instruction-execution unit 29 and to the unusable-context-interruption-control unit 427.

The switch-context-block-read-instruction-execution unit 413 reads context-block-identification information from the context-block-identification register (CTXTID) 419 in response to a switch-context-block-read instruction supplied from the instruction-decode unit 17, and stores the information in the general-purpose register 37. If an interruption is detected during the execution of a switch-context-block-read instruction, an interruption signal is transmitted to the interruption-control circuit 40.

The context-block-identification register 419 stores context-block-identification information indicative of a context block that was not accessible for reference or for alteration during execution of an instruction. This information is stored by the unusable-context-interruption-control unit 427 when an unusable-context interruption occurs.

The context-block-control-table-read-instruction-execution unit 415 reads entry information from the context-control-table entry 423 or 425 in response to the context-block-control-table-read instruction supplied from the instruction-decode unit 17, and stores the information in the general-purpose register 37. If interruption is detected during execution of a context-block-control-table-read instruction, an interruption signal is transmitted to the interruption-control circuit 40.

The context-block-control-table-write-instruction-execution unit 417 reads information from the general-purpose register 37 in response to a context-block-control-table-write instruction supplied from the instruction-decode unit 17, and writes the information in the context-control-table entry 423 or 425. If interruption is detected during execution of a context-block-control-table-write instruction, an interruption signal is transmitted to the interruption-control circuit 40.

The context-control-table entries 423 and 425 include the E field and a context field (CTXT#). The E field indicates whether a corresponding hardware resource is available for use. If there is "0" stored in the E field, the hardware resource is not usable, and does not contain the current context. If the E field stores "1" therein, the hardware resource is usable, and contains the current context. The context field (CTXT#) has a number stored therein indicative of a context that is currently stored in a corresponding context block. This number is referred to as a "context number".

The unusable-context-interruption-control unit 427 responds to a supplied interruption signal, and stores in the EPCR register 31 the address of an instruction to be executed upon return from interruption. Further, the unusable-context-interruption-control unit 427 stores in the EPSR register 33 data indicative of operation statuses prior to the interruption, and stores in the PSR register 35 data of operation statuses corresponding to the interruption. The unusable-context-interruption-control unit 427 also stores an identification of a context block to be switched in the context-block-identification register 419. A branch address corresponding to the interruption is supplied to the program counter 13.

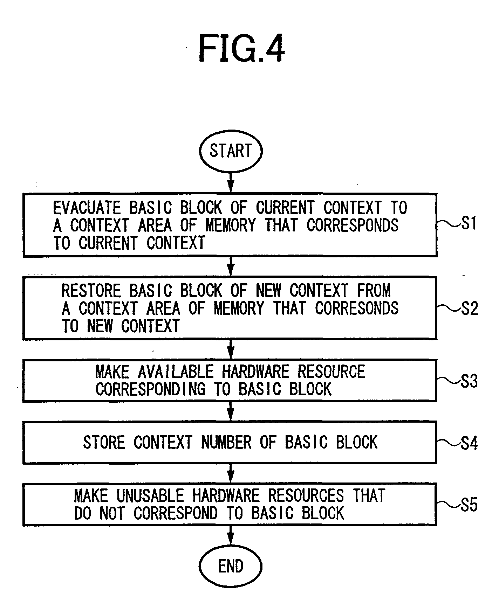

Fig.4 is a flowchart of a context-switch operation performed by the computer of the first embodiment shown in Fig.3. In the following, an overview of this operation will be described with reference to the flowchart. At a step S1, a basic block of the current context is evacuated to a context area of the memory 1 that corresponds to the current context. At a step S2, a basic context block of a new context is restored from a context area of the memory 1 that corresponds to the new context.

At a step S3, the hardware resource corresponding to the basic context block of the new context is made available for use. At a step S4, a context number of the basic context block of the new context is stored in the context-block-control table 421. At a step S5, hardware resources that do not correspond to the basic context block of the new context are made unusable. The procedure of context-switch operation then comes to an end.

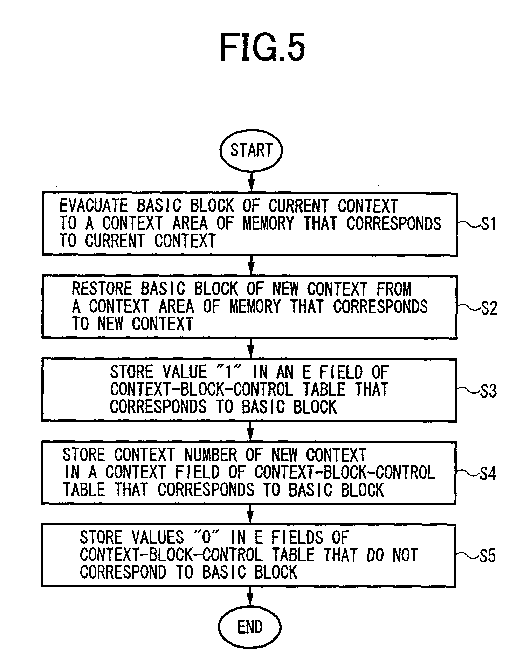

In what follows, the context-switch operation described above will be further described. Fig.5 is a flowchart of the context-switch operation. In the flowchart of Fig.5, steps S1 and S2 are the same as the steps S1 and S2 of Fig.4. At a step S3, a value "1" is stored in an E field of the context-block-control table 421 that corresponds to the basic context block of the new context.

At a step S4, the context number of the new context is stored in a context field of the context-block-control table 421 that corresponds to the basic context block of the new context. At a step S5, values "0" are stored in E fields of the context-block-control table 421 that do not correspond to the basic context block of the new context. The procedure of the context switch operation then comes to an end.

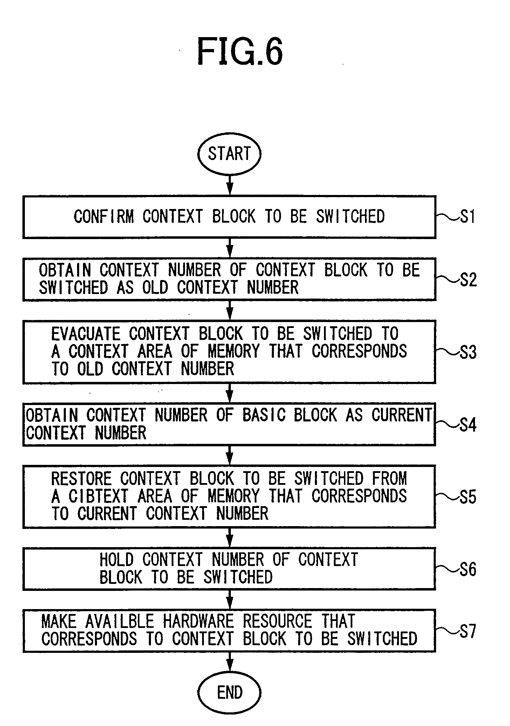

Fig.6 is a flowchart of an interruption operation performed by the computer of the first embodiment shown in Fgi.3 when a desired context is not available. This interruption operation will be described below with reference to Fig.6. The interruption operation is performed by executing an interruption-processing program, for example.

At a step S1, a context block to be switched is confirmed. At a step S2, a context number of the context block to be switched is confirmed as an old context number. At a step S3, the context block to be switched is evacuated to a context area of the memory 1 that corresponds to the old context number. At a step S4, a context number of the basic context block of the new context is obtained as a current context number. At a step S5, a context block to be switched is read from a context area of the memory 1 that corresponds to the current context number, and is thus restored.

At a step S6, the context numbers of the context blocks to be switched are held as retained data. At a step S7, the hardware resource that corresponds to the context block to be switched is made available for use. The procedure then comes to an end.

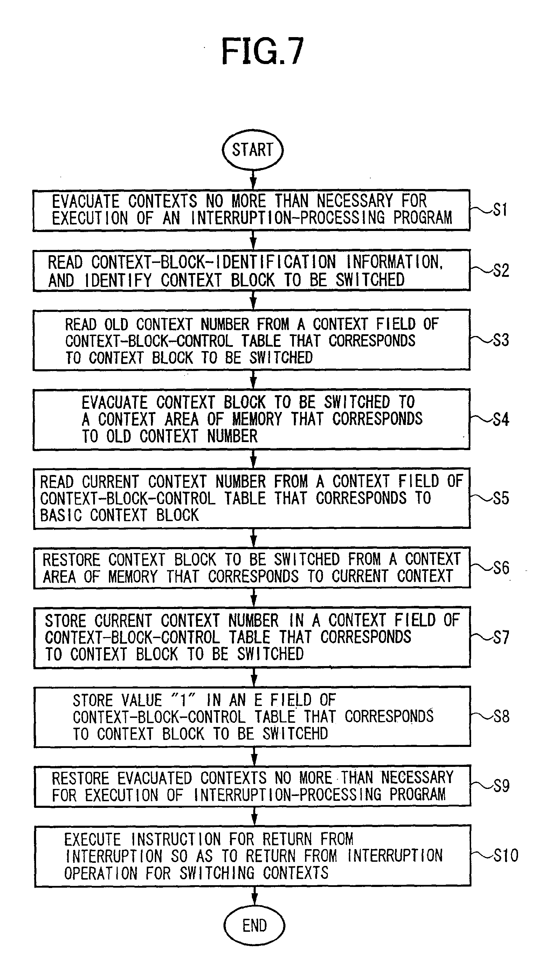

In the following, an operation performed when a desired context is not available will be described further in detail. Fig.7 is a flowchart of an operation performed when a desired context is not available. As shown in Fig.7, at a step S1, contexts no more than necessary for execution of an interruption-processing program are evacuated. At a step S2, context-block-identification information is read from the context-block-identification register 419, so that a context block to be switched is identified.

At a step S3, the old context number is read from the context field of the context-block-control table 421 that corresponds to the context block to be switched. At a step S4, the context block to be switched is evacuated to a context area of the memory 1 that corresponds to the old context number. At a step S5, the current context number is read from the context field of the context-block-control table 421 that corresponds to the basic context block of the new context.

At a step S6, the context block to be switched is read from the context area of the memory 1 that corresponds to the current context, and is thus restored. At a step S7, the current context number is stored in the context field of the context-block-control table 421 that corresponds to the context block to be switched.

At a step S8, the value "1" is stored in the E field of the context-block-control table 421 that corresponds to the context block to be switched. At a step S9, the contexts no more than necessary for execution of an interruption-processing program are restored. At a step S10, an instruction for return from interruption is executed to return from the interruption operation for switching contexts. The procedure then comes to an end.

In this manner, the computer of the first embodiment employs hardware resources divided into a plurality of areas, which allows a plurality of programs to be executed in a parallel and time-divided fashion. If one of the first through third detection units 405 through 411 finds that a hardware resource necessary for execution of a new program is already in use, the unusable-context-interruption-control unit 427 initiates the unusable-context-interruption operation.

When this happens, the context-block-identification information indicative of a context block to which reference or alteration cannot be made is stored in the context-block-identification register 419, and the context number of the evacuated block or the like is stored in the context-block-control table 421. Further, information stored in the hardware resource necessary for execution of the new program is evacuated to the memory 1 in accordance with the context-block-identification information.

When the execution of the new program comes to a halt or to an end, the original (old) context is restored to the hardware resource in accordance with the context number or the like of the evacuated context. Thereafter, execution of the original (old) program is resumed.

In this manner, the computer of the first embodiment achieves high-speed switching of contexts, and is especially suitable in the switching of multiple contexts. The present invention thus achieves efficient execution of a plurality of task programs.

Further, interruption processing is engaged so as to evacuate a context only when one of the first through third detection units 405 through 411 finds that the supplied instruction is to refer to or alter a register that is not a current context. This facilitates efficient use of hardware resources.

### [SECOND EMBODIMENT]

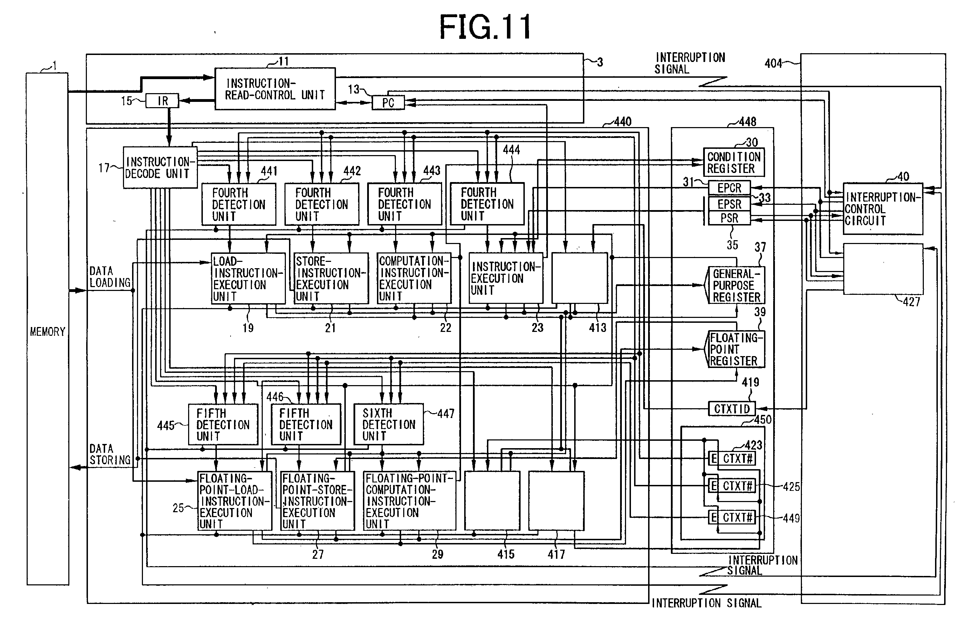

Fig.11 is a block diagram of a computer according to a second embodiment of the present invention. Context objects of the computer shown in Fig.11 are shown in Table 3 provided below.

**Table 2**

| Context Block No. | Register Name | Basic Context Block |
|---|---|---|
| 0 | EPCR | x |
| | EPSR | |
| | COND | |
| | Lower Area of GR | |
| 1 | Upper Area of GR | - |
| 2 | FR | - |

Registers having the context block No. 0 shown in Table 3 stores basic context blocks.

As shown in Fig.11, the computer according to the second embodiment of the present invention has a similar structure to the computer of the first embodiment shown in Fig.3, but differs in that fourth detection units 441 through 444 replace the first detection units 405 through 408, that fifth detection units 445 and 446 replace the second detection units 409 and 410, and that sixth detection unit 447 replaces the third detection unit 411.

A further difference is that a context-control table 450 including a context-control-table entry 449 is provided in place of the context-block-control table 421.

In this configuration, the fourth detection units 441 through 444 have input terminals thereof connected to the instruction-decode unit 17 and to the context-control-table entries 423 and 425, and have output terminals thereof connected to the unusable-context-interruption-control unit 427. Further, another output terminal of the fourth detection unit 441 is connected to the load-instruction-execution unit 19, and another output terminal of the fourth detection unit 442 is connected to the store-instruction-execution unit 21. Moreover, another output terminal of the fourth detection unit 443 is connected to the computation-instruction-execution unit 22, and another output terminal of the fourth detection unit 444 is connected to the instruction-execution unit 23.

The fifth detection units 445 and 446 have input terminals thereof connected to the instruction-decode unit 17 and to the context-control-table entries 423, 425, and 449, and have output terminals thereof connected to the unusable-context-interruption-control unit 427. Another output terminal of the fifth detection unit 445 is connected to the floating-point-load-instruction-execution unit 25, and another output terminal of the fifth detection unit 446 is connected to the floating-point-store-instruction-execution unit 27. The sixth detection unit 447 has input terminals thereof connected to the instruction-decode unit 17 and to the context-control-table entries 425 and 449, and has output terminals thereof connected to the unusable-context-interruption-control unit 427 and to the floating-point-computation-instruction-execution unit 29.

The computer shown in Fig.11 and having a configuration as described above operates in a similar manner to the computer of the first embodiment shown in Fig.3. In what follows, differences in operation will be described.

The instruction-decode unit 17 supplies load instructions to the fourth detection unit 441, store instructions to the fourth detection unit 442, and computation and comparison instructions to the fourth detection unit 443. Further, the fourth detection unit 444 receives branch instructions, conditional branch instructions, and interruption-return instructions.

Moreover, the instruction-decode unit 17 supplies floating-point-load instructions to the fifth detection unit 445, and supplies floating-point-store instructions to the fifth detection unit 446. The third detection unit 447 receives floating-point-computation instructions and floating-point-comparison instructions.

The fourth detection units 441 through 444 each check whether a register referenced or modified in execution of a supplied instruction is designated as a current context. If the E field of the context-control-table entry 423 has a value "0" stored therein, and if the supplied instruction is to refer to or modify the lower area of the general-purpose register 37, an interruption signal is supplied to the unusable-context-interruption-control unit 427. Further, if the E field of the context-control-table entry 425 has a value "0" stored therein, and if the supplied instruction is to refer to or modify the upper area of the general-purpose register 37, an interruption signal is supplied to the unusable-context-interruption-control unit 427.

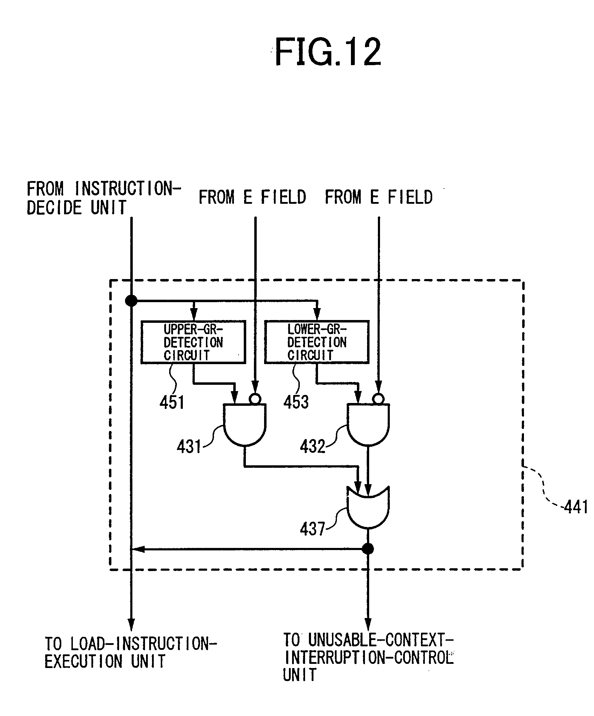

The fourth detection units 441 through 444 each have substantially the same configuration. Fig.12 is a circuit diagram showing a configuration of the fourth detection unit 441. As shown in Fig.12, the fourth detection unit 441 includes a lower-GR-detection circuit 451, an upper-GR-detection circuit 453, the logic circuit 431 and 432, and the OR circuit 437. The lower-GR-detection circuit 451 checks whether it is necessary to refer to or modify the lower area of the general-purpose register 37 during execution of a load instruction. The upper-GR-detection circuit 451 checks whether it is necessary to refer to or modify the upper area of the general-purpose register 37 during execution of a load instruction.

A load instruction supplied from the instruction-decode unit 17 is let pass to be output to the load-instruction-execution unit 19, and, also, is input to the lower-GR-detection circuit 451 and to the upper-GR-detection circuit 453. An output of the lower-GR-detection circuit 451 together with the E-field value of the context-control-table entry 423 is supplied to the logic circuit 431. Further, an output of the upper-GR-detection circuit 453 along with the E-field value of the context-control-table entry 425 is provided to the logic circuit 432. The output signals of the logic circuits 431 and 432 are both supplied to the OR circuit 437. An output signal of the OR circuit 437 is provided to the unusable-context-interruption-control unit 427 and to the load-instruction-execution unit 19.

The fifth detection units 445 and 446 each have substantially the same configuration, and check whether a register referenced or modified in execution of the supplied instruction is designated as a current context. If the E field of the context-control-table entry 423 has a value "0" stored therein, and if the supplied instruction is to refer to or modify the lower area of the general-purpose register 37, an interruption signal is supplied to the unusable-context-interruption-control unit 427. Further, if the E field of the context-control-table entry 425 has a value "0" stored therein, and if a supplied instruction is to refer to or modify the upper area of the general-purpose register 37, an interruption signal is supplied to the unusable-context-interruption-control unit 427. Moreover, if the E field of the context-control-table entry 449 has a value "0" stored therein, and if a supplied instruction is to refer to or modify the floating-point register 39, an interruption signal is supplied to the unusable-context-interruption-control unit 427.

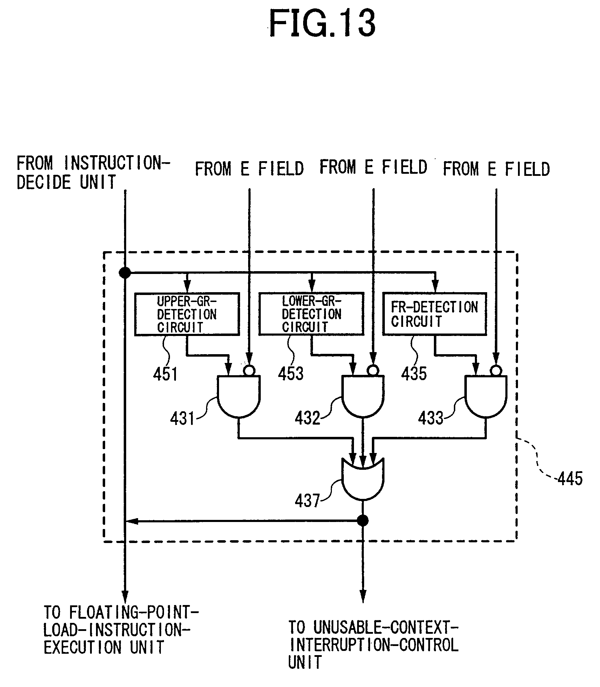

Fig.13 is a circuit diagram showing the fifth detection unit 445. As shown in Fig.13, the fifth detection unit 445 includes the lower-GR-detection circuit 451, the upper-GR-detection circuit 453, the FR-detection circuit 435, the logic circuits 431 through 433, and the OR circuit 437. The FR-detection circuit 435 checks whether a floating-point-load instruction to be executed requires reference to or alteration to the floating-point register 39.

A floating-point-load instruction supplied from the instruction-decode unit 17 is let pass through the fifth detection unit 409 to be output to the floating-point-load-instruction-execution unit 25, and, also, is supplied to the lower-GR-detection circuit 451, the upper-GR-detection circuit 453, and the FR-detection circuit 435. An output of the lower-GR-detection circuit 451 together with the E-field value of the context-control-table entry 423 is supplied to the logic circuit 431. An output of the upper-GR-detection circuit 453 together with the E-field value of the context-control-table entry 425 is supplied to the logic circuit 432. An output of the FR-detection circuit 435 along with the E-field value of the context-control-table entry 449 is provided to the logic circuit 433.

The output signals of the logic circuits 431 through 433 are all supplied to the OR circuit 437. An output signal of the OR circuit 437 is provided to the unusable-context-interruption-control unit 427 and to the floating-point-load-instruction-execution unit 25.

The sixth detection unit 447 checks whether the supplied instruction to be executed refers to or alters a register that is a current context. If the E field of the context-control-table entry 449 stores therein "0", and the supplied instruction is to refer to or alter the floating-point register 39, an interruption signal is sent to the unusable-context-interruption-control unit 427.

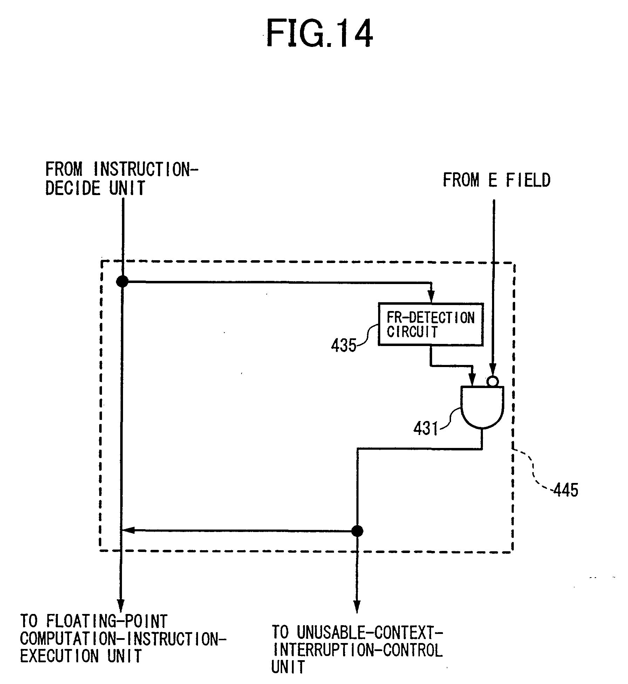

Fig.14 is a circuit diagram showing the sixth detection unit 447. The sixth detection unit 447 includes the FR-detection circuit 435 and the logic circuit 432. A floating-point-load instruction supplied from the instruction-decode unit 17 is let pass through the sixth detection unit 447 to be output to the floating-point-computation-instruction-execution unit 29, and, also, is supplied to the FR-detection circuit 435. An output of the FR-detection circuit 435 along with the E-field value of the context-control-table entry 449 is provided to the logic circuit 432. An output signal of the logic circuit 432 is supplied to the floating-point-computation-instruction-execution unit 29 and to the unusable-context-interruption-control unit 427.

The context-switch operation performed by the computer of the second embodiment is the same as that of the first embodiment, and follows the steps as shown in the flowcharts of Fig.4 and Fig.5. By the same token, the interruption operation performed when desired contexts are not available follows the same steps as shown in the flowcharts of Fig.6 and Fig.7 of the first embodiment.

In this manner, the computer of the second embodiment has the same advantages as the computer of the first embodiment, and makes more efficient use of the general-purpose register 37. This is done by controlling the general-purpose register 37 by dividing it into the upper area and the lower area for the purpose of context switching, thereby achieving context switching within a minimum area of control.

### [THIRD EMBODIMENT]

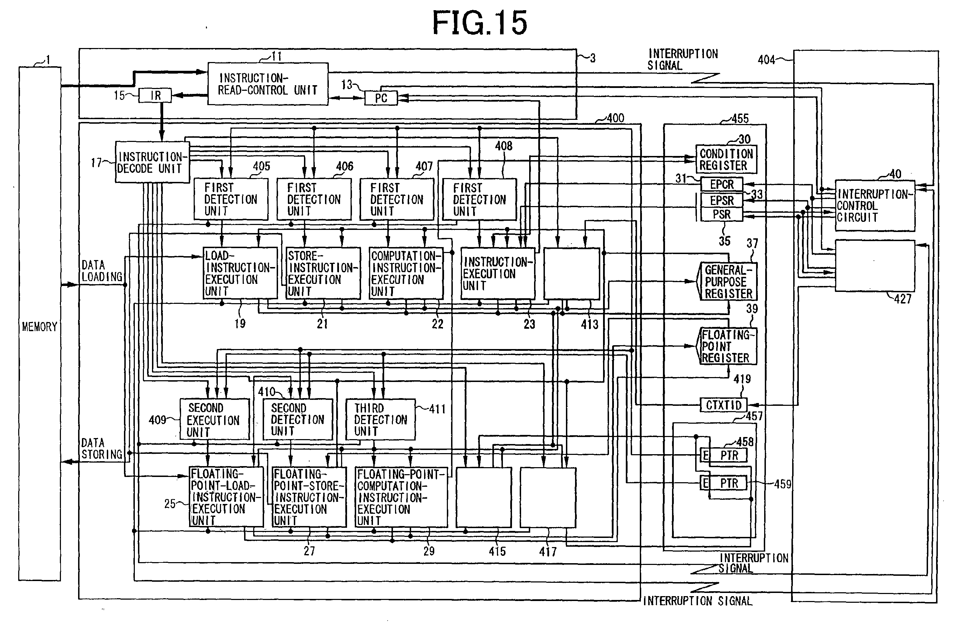

Fig.15 is a block diagram of a computer according to a third embodiment of the present invention. As shown in Fig.15, the computer according to the third embodiment of the present invention has a similar structure to the computer of the first embodiment shown in Fig.3, but differs in that a context-block-control table 457 including context-control-table entries 458 and 459 each having an address field PTR is provided in place of the context-block-control table 421.

The address field (PTR) stores therein an address indicative of a context area of the memory 1 that corresponds to a context block.

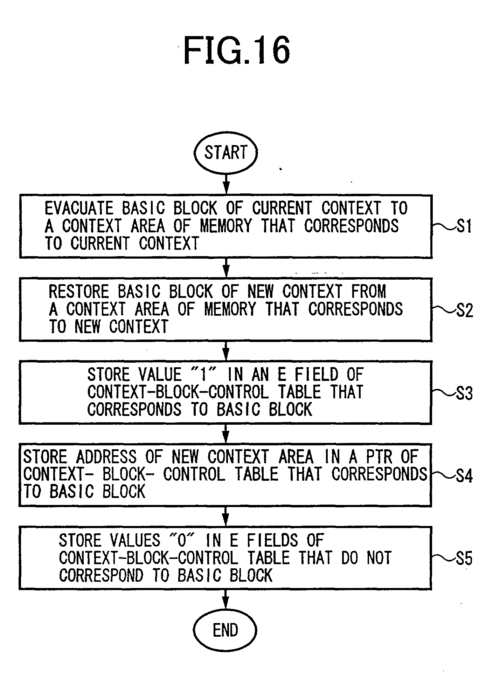

In the following, the context-switch operation performed by the computer of the third embodiment will be described. Fig.16 is a flowchart of the context-switch operation performed by the computer of the third embodiment.

At a step S1, a basic context block of the current context is evacuated to a context area of the memory 1 that corresponds to the current context. At a step S2, a basic context block of a new context is restored from a context area of the memory 1 that corresponds to the new context. At a step S3, a value "1" is stored in an E field of the context-block-control table 457 that corresponds to the basic context block of the new context.

At a step S4, an address of the new context area is stored in an address field (PTR) of the context-block-control table 457 that corresponds to the basic context block of the new context. At a step S5, values "0" are stored in E fields of the context-block-control table 457 that do not correspond to the basic context block of the new context. The procedure of the context switch operation then comes to an end.

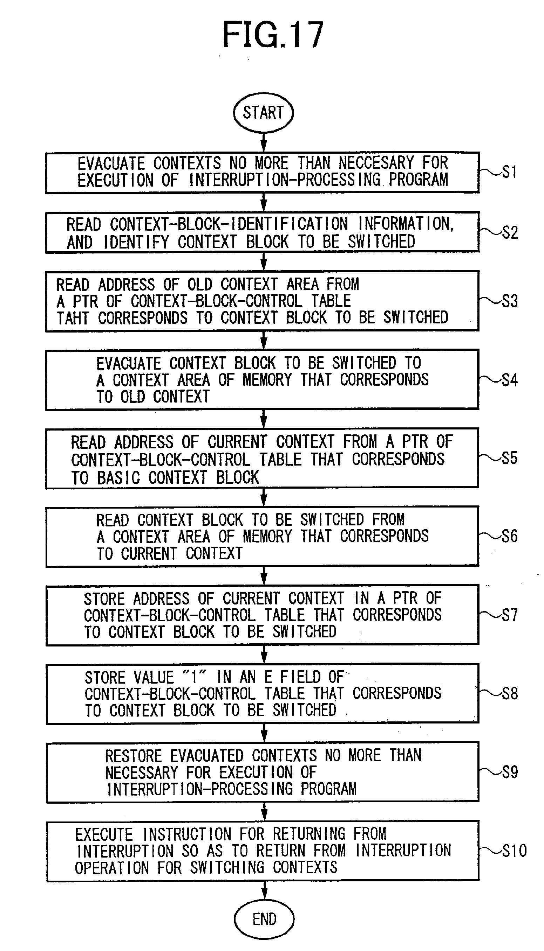

In the following, an interruption operation performed when desired contexts are not available will be described. Fig.17 is a flowchart showing the interruption operation performed when desired contexts are not available. As shown in Fig.17, at a step S1, contexts no more than necessary for execution of an interruption-processing program are evacuated. At a step S2, context-block-identification information is read from the context-block-identification register (CTXTID) 419, so that a context block to be switched is identified.

At a step S3, an address of the old context area is read from an address field (PTR) of the context-block-control table 457 that corresponds to the context block to be switched. At a step S4, the context block to be switched is evacuated to a context area of the memory 1 that corresponds to the above-mentioned address. At a step S5, an address of the current context is read from an address field (PTR) of the context-block-control table 457 that corresponds to the basic context block of the new context.

At a step S6, the context block to be switched is read from the context area of the memory 1 that corresponds to the current context, and is thus restored. At a step S7, an address corresponding to the current context is stored in the address field (PTR) of the context-block-control table 457 that corresponds to the context block to be switched, thereby setting the current context area.

At a step S8, the value "1" is stored in the E field of the context-block-control table 457 that corresponds to the context block to be switched. At a step S9, the contexts no more than necessary for execution of an interruption-processing program are restored. At a step S10, an instruction for returning from interruption is executed to return from the interruption operation for switching contexts. The procedure then comes to an end.

As described above, the computer of the third embodiment has the same advantages as the computer of the first embodiment, and, further, provides greater latitude in context switching by switching contexts based on the addresses corresponding to the contexts.

### [FOURTH EMBODIMENT]

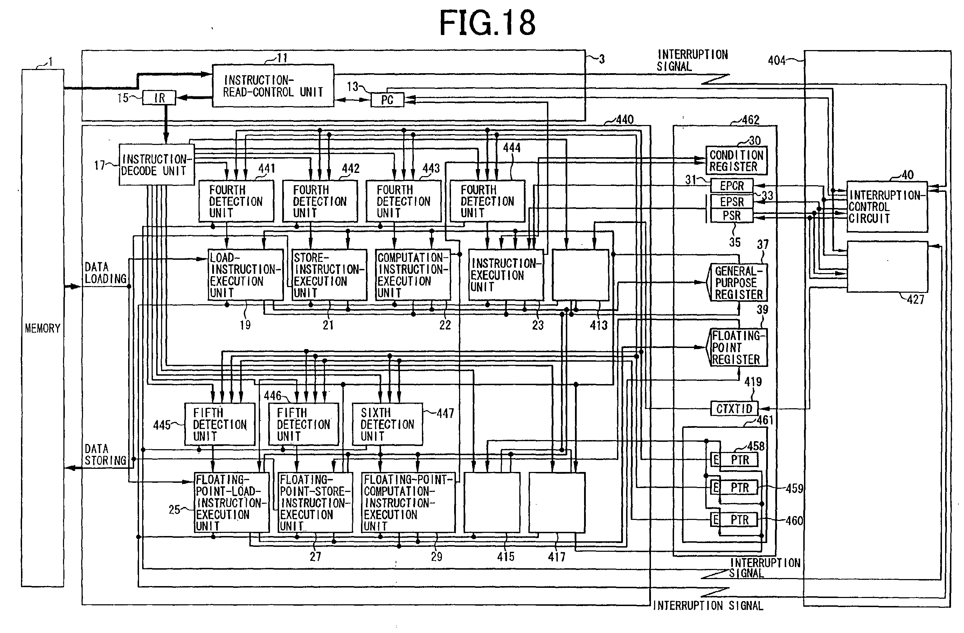

Fig.18 is a block diagram of a computer according to a fourth embodiment of the present invention. As shown in Fig.18, the computer according to the fourth embodiment of the present invention has a similar structure to the computer of the second embodiment shown in Fig.11, but differs in that a context-block-control table 461 including context-control-table entries 458 through 460 each having an address field PTR is provided in place of the context-block-control table 450.

The contest-switch operation performed by the computer of Fig.18 is the same as that of the third embodiment, and follows the steps of the flowchart of Fig.16. By the same token, the interruption operation performed when desired contexts are not available follows the same steps as the flowchart of Fig.17 of the third embodiment.

Accordingly, the computer of the fourth embodiment has the same advantages as the computer of the second embodiment, and, further, can increase latitude in context switching in the same manner as does the computer of the third embodiment.

### [FIFTH EMBODIMENT]

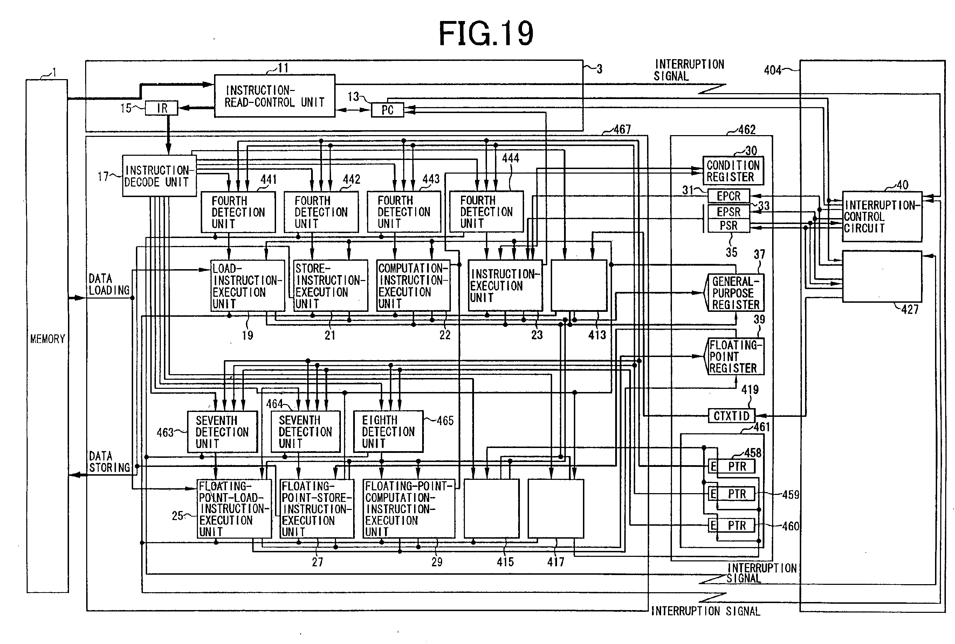

Fig.19 is a block diagram of a computer according to a fifth embodiment of the present invention. Context objects of the computer according to the fifth embodiment are the same as those shown in Table 3.

As shown in Fig.19, the computer according to the fifth embodiment of the present invention has a similar structure to the computer of the fourth embodiment shown in Fig.18, but differs in that seventh detection units 463 and 464 are provided in place of the fifth detection units 445 and 446, and that an eighth detection unit 465 replaces the sixth detection unit 447.

The seventh detection units 463 and 464 each have substantially the same configuration, and check whether a register referenced or modified in execution of the supplied instruction is designated as a current context. If the E field of the context-control-table entry 458 has a value "0" stored therein, and if the supplied instruction is to refer to or modify the lower area of the general-purpose register 37, an interruption signal is supplied to the unusable-context-interruption-control unit 427. Further, if the E field of the context-control-table entry 459 has a value "0" stored therein, and if a supplied instruction is to refer to or modify the upper area of the general-purpose register 37, an interruption signal is supplied to the unusable-context-interruption-control unit 427. Moreover, if the E field of the context-control-table entry 460 has a value "0" stored therein, and if the supplied instruction is to refer to or modify the floating-point register 39, an interruption signal is supplied to the unusable-context-interruption-control unit 427.

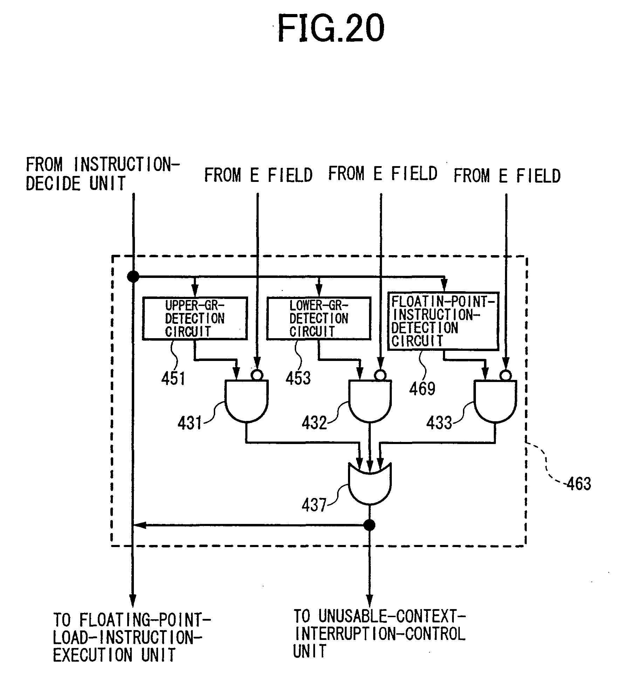

Fig.20 is a circuit diagram showing the seventh detection unit 463. As shown in Fig.20, the seventh detection unit 463 includes the lower-GR-detection circuit 451, the upper-GR-detection circuit 453, a floating-point-instruction-detection circuit 469, the logic circuits 431 through 433, and the OR circuit 437. The floating-point-instruction-detection circuit 469 checks whether an instruction to be executed is one of the floating-point-load instruction, the floating-point-store instruction, the floating-point-computation instruction, and the floating-point-comparison instruction.

A floating-point-load instruction supplied from the instruction-decode unit 17 is let pass to be output to the floating-point-load-instruction-execution unit 25, and, also, is supplied to the lower-GR-detection circuit 451, the upper-GR-detection circuit 453, and the floating-point-instruction-detection circuit 469. An output of the lower-GR-detection circuit 451 together with the E-field value of the context-control-table entry 458 is supplied to the logic circuit 431. An output of the upper-GR-detection circuit 453 together with the E-field value of the context-control-table entry 459 is supplied to the logic circuit 432. An output of the floating-point-instruction-detection circuit 469 along with the E-field value of the context-control-table entry 460 is provided to the logic circuit 433.

The output signals of the logic circuits 431 through 433 are all supplied to the OR circuit 437. An output signal of the OR circuit 437 is provided to the unusable-context-interruption-control unit 427 and to the floating-point-load-instruction-execution unit 25.

The eighth detection unit 465 checks whether the supplied instruction to be executed refers to or alters a register that is a current context. If the E field of the context-control-table entry 460 stores therein "0", and the supplied instruction to be executed is a floating-point instruction such as a floating-point-computation instruction, an interruption signal is sent to the unusable-context-interruption-control unit 427.

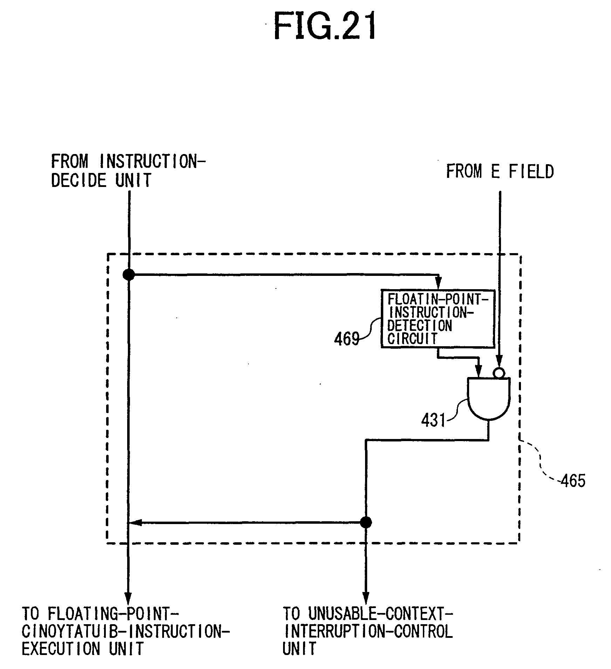

Fig.21 is a circuit diagram showing the eighth detection unit 465. As shown in Fig.21, the eighth detection unit 465 includes the floating-point-instruction-detection circuit 469 and the logic circuit 432. A floating-point-load instruction supplied from the instruction-decode unit 17 is let pass through the eighth detection unit 465 to be output to the floating-point-computation-instruction-execution unit 29, and, also, is supplied to the floating-point-instruction-detection circuit 469. An output of the floating-point-instruction-detection circuit 469 along with the E-field value of the context-control-table entry 460 is provided to the logic circuit 432. An output signal of the logic circuit 432 is supplied to the floating-point-computation-instruction-execution unit 29 and to the unusable-context-interruption-control unit 427.

The context-switch operation performed by the computer of Fig.19 is the same as that of the third embodiment, and follows the steps as shown in the flowchart of Fig.16. By the same token, the interruption operation performed when desired contexts are not available follows the same steps as shown in the flowchart of Fig.17 of the third embodiment.

In this manner, the computer of the fifth embodiment has the same advantages as the computer of the fourth embodiment, and further improves reliability of floating-point computation. This improvement is brought about by attending to context switching of floating-point computations in response to the detection of a floating-point instruction by the seventh detection units 463 and 464 and the eighth detection unit 465.

As described above, hardware resources are divided into a plurality of areas, and a plurality of programs are carried out as parallel processing in a time-division manner. If an area is being used by a first program, and is necessary for execution of a second program, information stored in this area is evacuated together with identification information indicative of the first program, and is later restored in accordance with the identification information. This achieves high-speed switching of contexts, thereby providing a basis for efficient parallel processing of the plurality of programs.

Further, the identification information may be stored in memory, and the information stored in the area may be evacuated, all of which are performed as part of an interruption process. This reduces an overall size of programs and a circuit size of the computer, thereby contributing to improvement of operation speed.

If the first area and a second area of the plurality of areas are necessary for execution of the second program and are being used for execution of the first program, identification information identifying the first program is recorded in memory, and information stored in the first area is evacuated, followed by a subsequent evacuation of information stored in the second area when use of the second area becomes actually necessary for execution of the second program. This configuration allows the first program to use the second area until the evacuation of the second area actually becomes necessary. This achieves efficient use of hardware resources of the computer.

### [SECOND PRINCIPLE]

In the following, embodiments of the present invention according to a second principle will be described with reference to accompanying drawings.

The present invention generally relates to methods of pipeline processing and an apparatus based on the pipeline processing, and particularly relates to a method of pipeline processing and an apparatus based on the pipeline processing which perform asynchronous computations by connecting a central processing unit to computation devices.

In recent years, there has been a greater demand for computers having increasingly higher performance. As a result, a central processing unit (CPU), operating alone, cannot meet the demand for expected performance. In some processing schemes, computation devices for high-speed computation are provided separately, and operate in parallel to and asynchronously from the CPU, thereby augmenting processing power of the CPU. Such computation devices include a coprocessor such as for floating-point computation.

Pipeline processing is based on a method of control by which processing of instructions is divided into a plurality of processing stages, and execution of instructions are advanced in a pipeline manner to achieve parallel processing. The pipeline processing makes it possible to execute an instruction per stage cycle, thereby improving processing power per unit time.

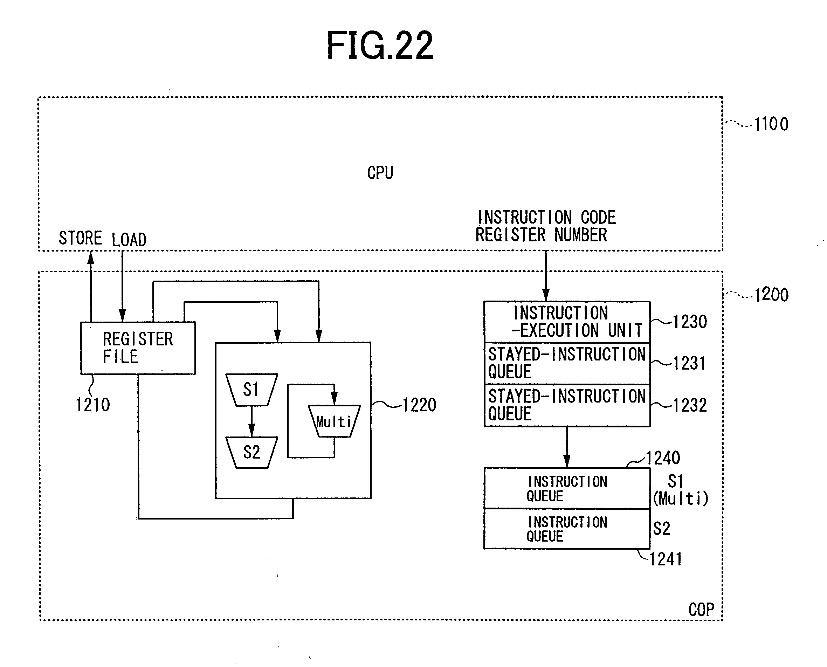

Fig.22 is a block diagram of a pipeline processing apparatus. The pipeline processing apparatus includes a CPU 1100 and a COP 1200. The CPU 1100 and the COP 1200 are connected together. When the CPU 1100 receives an instruction for computation that requires use of the COP 1200 such as an instruction for floating-point computation, the instruction code and register numbers of this instruction are passed to the COP 1200.

The COP 1200 receives the instruction code and the register numbers from the CPU 1100, and stores them in an instruction buffer 1230. The instruction stored in the instruction buffer 1230 is executed by a pipelined computation unit 1220 when all pipeline hazards are eliminated. The instruction propagates through instruction queues 1240 and 1241, corresponding to computation stages S1 and S2 of the pipelined computation unit 1220.

At the last computation stage S2, an exception check is made to decide whether the computation has properly completed. If the computation has properly completed, the instruction is removed from the instruction queue 1241, and the results of computation are supplied from the pipelined computation unit 1220 to a register file 1210 for storage of the computation results. If the computation has not completed properly, and a computation exception has been detected, the instruction stays in the instruction queue 1241. Information about the exception is recorded in the instruction queue 1241, and a request for interruption is sent to the CPU 1100. When this happens, the next and following instructions stored in the instruction queue 1240 are marked as uncompleted instructions.

In the case of multi-cycle computation instructions requiring multiple cycles, instructions end up staying for a plurality of cycles in the instruction queues 1240 and 1241 because of their long computation latency. During this time, the following instructions are forced to stay in the instruction queue 1240 or in the instruction buffer 1230. In order to minimize the stay time, the instruction buffer 1230 is configured to have a plurality of stages, and includes a stayed-instruction queue 1231 and a stayed-instruction queue 232, which store instructions supplied from the CPU 1100. In this manner, the pipeline processing apparatus of the related art is configured to provide clear correspondences between computation instructions and actual computations, and is configured to provide easy handling of interruptions upon detection of exceptions.

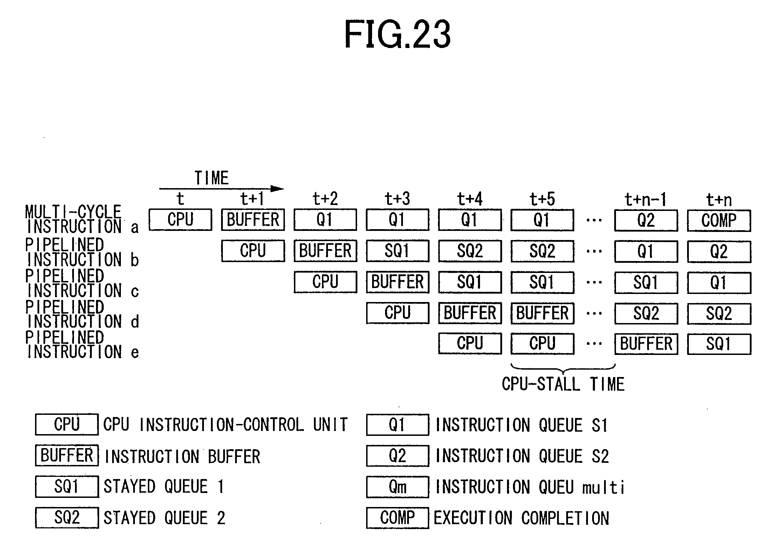

Fig.23 is a time chart showing operation of a pipeline processing apparatus. The time chart of Fig.23 shows a case in which computation instructions are successively executed in an order of a multi-cycle computation instruction a, a pipelined computation instruction b, a pipelined computation instruction c, a pipelined computation instruction d, and a pipelined computation instruction e.

At the time t, the multi-cycle computation instruction a is supplied to the CPU 1100, and, then, is stored in the instruction queue 1240 via the instruction buffer 1230. Since the multi-cycle computation instruction a requires a plurality of cycles before the completion thereof, this instruction ends up staying in the instruction queue 1240 from the time t+2.

At the time t+1, the pipelined computation instruction b is supplied to the CPU 1100, and, then, is stored in the instruction buffer 1230. At the time t+3, the pipelined computation instruction b is supplied from the instruction buffer 1230 to the stayed-instruction queue 1231 since the multi-cycle computation instruction a occupies the instruction queue 1240. At the time t+4, the pipeline computation instruction b is supplied from the stayed-instruction queue 1231 to the stayed-instruction queue 1232, and, then, stays in the stayed-instruction queue 1232.

At the time t+2, the pipelined computation instruction c is supplied to the CPU 1100, and, then, is stored in the instruction buffer 1230. At the time t+4, the pipelined computation instruction c is supplied from the instruction buffer 1230 to the stayed-instruction queue 1231, and stays in the stayed-instruction queue 1231 since the multi-cycle computation instruction a occupies the instruction queue 1240.

At the time t+3, the pipelined computation instruction d is supplied to the CPU 1100, and, then, is stored in the instruction buffer 1230. Since the pipelined computation instructions b and c are staying in the stayed-instruction queue 1232 and the stayed-instruction queue 1231, respectively, the pipelined computation instruction d remains in the instruction buffer 1230.

Since no space is available in the instruction buffer 1230 when the pipelined computation instruction e is supplied to the CPU 1100 at the time t+4, the pipelined computation instruction e is put in a CPU stall condition, which refers to a condition in which processing is waited for. Namely, the related-art pipeline processing apparatus suffers a performance reduction regarding overall processing of instructions when instructions following a multi-cycle computation instruction are put in a stay to wait for completion of the multi-cycle computation instruction. If the numbers of stayed-instruction queues are increased, the frequency of having the CPU stall condition can be reduced. Such a design, however, results in increases in power consumption and cots.

Accordingly, there is a need for a method of pipeline processing and an apparatus based on the pipeline processing which can avoid a performance reduction regarding processing of instructions, and can reduce power consumption and costs.

Accordingly, it is a general object of the present invention to provide a method of pipeline processing and an apparatus based on the pipeline processing whereby one or more of the problems caused by the limitations and disadvantages of the related art are substantially obviated.

In order to achieve the above object of the present invention, a method of pipeline processing that attends to computation by connecting a central processing unit to an additional computation unit includes the steps of storing a computation instruction supplied to the computation unit, executing the stored computation instruction, and checking if completing the execution of the computation instruction requires more than a predetermined time length, shifting the stored computation instruction to a dedicated storage if completing the execution of the computation instruction requires more than the predetermined time length, and executing the computation instruction stored in the dedicated storage until the execution of the computation instruction is completed.

In this manner, when a multi-cycle computation instruction requiring a lengthy time for execution to be completed is executed, the multi-cycle computation instruction is stored in the dedicated storage, thereby avoiding a performance reduction of instruction processing regarding to the subsequent computation instructions. Further, this configuration can reduce the number of instruction buffers to suppress power consumption and costs.

Further, an architecture that permits out-of-order completion of instructions, each instruction does not have to be completed in an order of issuance of instructions. The present invention is also applicable to such case.

Further, the method as described above further includes a step of successively outputting results of the execution of the computation instruction if the computation instruction is not an instruction requiring more than the predetermined time length in order to complete the execution.

In this manner, the multi-cycle computation instruction requiring a lengthy time before execution is completed can be shifted through storage places at the same general timings as the shifting of the other instructions, so that computation processes can be attended without stalling the subsequent instructions.

Moreover, an apparatus for pipeline processing in which a central processing unit is connected to an additional computation unit to attend to computation includes a first storage unit storing a computation instruction supplied to the computation unit, a first computation unit which executes the computation instruction stored in the first storage unit, a second storage unit which stores the computation instruction executed by the first computation unit if completing the execution of the computation instruction requires more than a predetermined time length, and a second computation unit which executes the computation instruction stored in the second storage unit until the execution of the computation instruction is completed.

In this manner, when a multi-cycle computation instruction requiring a lengthy time for execution to be completed is executed, the second storage unit for storing the multi-cycle computation instruction and the second computation unit for executing the multi-cycle computation instruction are provided, thereby avoiding a performance reduction of instruction processing regarding to the subsequent computation instructions. Further, this configuration can reduce the number of instruction buffers to suppress power consumption and costs.

Further, an apparatus for pipeline processing in which a central processing unit is connected to an additional computation unit to attend to computation includes a first storage unit storing a computation instruction supplied to the computation unit, a first computation unit which executes the computation instruction stored in the first storage unit, second storage units, one of which stores the computation instruction executed by the first computation unit if completing the execution of the computation instruction requires more than a predetermined time length, an indication unit which indicates an order of issuance of computation instructions stored in the second storage units, and a second computation unit which executes a first-issued instruction among the computation instructions stored in the second storage units by selecting the first-issued instruction based on an indication of the indication unit until the execution of the first-issued instruction is completed.

In this manner, the indication unit for indicating an order of issuance of computation instructions stored in the second storage units is provided, thereby making it possible to carry out multi-cycle computation instructions in the order of issuance of computation instructions.

Moreover, an apparatus for pipeline processing in which a central processing unit is connected to a plurality of additional computation units to attend to computation includes a first storage unit which is provided in each of the computation units, and stores a computation instruction supplied to each of the computation units, a first computation unit which is provided in each of the computation units, and executes the computation instruction stored in the first storage unit, second storage units, each of which is provided in a corresponding one of the computation units, and stores the computation instruction executed by the first computation unit if completing the execution of the computation instruction requires more than a predetermined time length, an indication unit which stores values indicative of an order of issuance of computation instructions stored in the second storage units, and a second computation unit which executes a first-issued instruction among the computation instructions stored in the second storage units by selecting the first-issued instruction based on an indication of the indication unit until the execution of the first-issued instruction is completed, wherein an order of priority is determined in advance such that the values are stored in the indication unit in the order of priority.

In this manner, the indication unit serves to give the order of priority to the computation units, so that the indication unit can cope with a situation in which a plurality of multi-cycle computation instructions are issued simultaneously to different computation units.

Further, the apparatus as described above is such that a computation instruction requiring more than the predetermined time length for execution thereof is a multi-cycle computation instruction that requires a plurality of cycles before completion of execution thereof.

In this manner, the present invention makes it possible to avoid a performance reduction in processing of subsequent pipeline computation instructions when a multi-cycle computation instruction is performed. Further, this configuration can reduce the number of instruction buffers to suppress power consumption and costs.

In the following, embodiments of the present invention according to a second principle will be described with reference to the accompanying drawings.

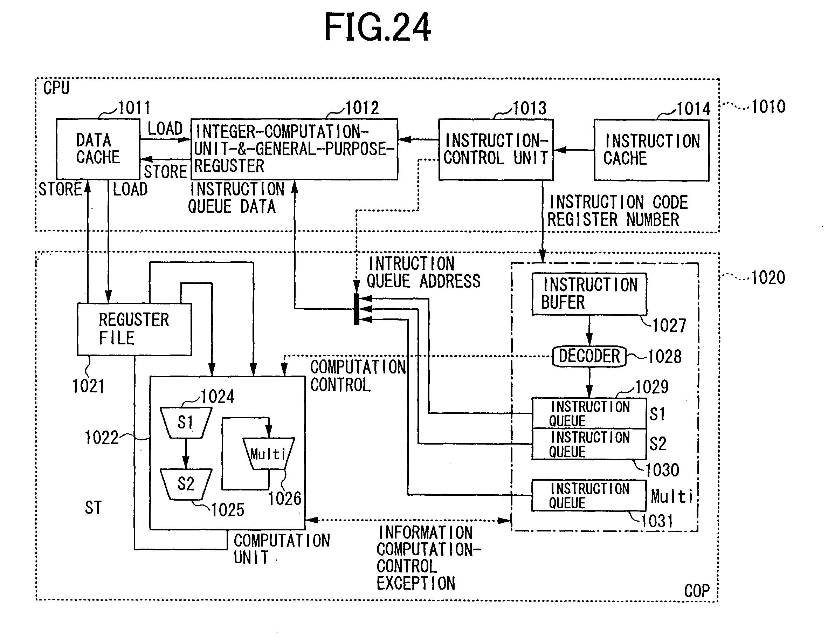

Fig.24 is a block diagram of a first embodiment of a pipeline processing apparatus according to the present invention. The pipeline processing apparatus includes a CPU 1010 and a COP 1020 connected together. The CPU 1010 includes a data cache 1011, an integer-computation-unit-&-general-purpose-register 1012, an instruction-control unit 1013, and an instruction cache 1014. The COP 1020 includes a register file 1021, a computation unit 1022, an instruction buffer 1027, a decoder 1028, an instruction queue 1029, an instruction queue 1030, and an instruction queue 1031 for multi-cycle computation instructions.

The instruction cache 1014 of the CPU 1010 stores therein a program, and supplies instructions to the instruction-control unit 1013. Upon receiving an instruction, the instruction-control unit 1013 checks whether the received instruction requires use of the COP 1020 such as for floating-point computation. If it is ascertained that the use of the COP 1020 is necessary, the instruction code and register numbers of the instruction are supplied to the instruction buffer 1027 of the COP 1020. If it is ascertained that the use of the COP 1020 is not necessary such as in the case of an instruction for integer computation, the instruction code and register numbers are supplied to the integer-computation-unit-&-general-purpose-register 1012.

The integer-computation-unit-&-general-purpose-register 1012 reads data from the data cache 1011 according to the register numbers, and attends to data processing in response to the instruction code. Thereafter, the integer-computation-unit-S-general-purpose-register 1012 stores the results of computation in the data cache 1011.

The instruction buffer 1027 receives the instruction code and the register numbers from the instruction-control unit 1013, and supplies them to the decoder 1028 when all pipeline hazards are eliminated. Namely, the instruction buffer 1027 checks if any register interference or hardware resource conflicts are present. The decoder 1028 decodes the supplied instruction code, and stores a computation instruction in the instruction queue 1029. Further, the decoder 1028 supplies the computation instruction and the register numbers to a computation stage 1024 of the computation unit 1022. If all the pipeline hazards are not eliminated, the instruction buffer 1027 chooses not to supply the instruction code and the register numbers to the decoder 1028, and checks again at the next operation cycle whether all the pipeline hazards are eliminated.

The instruction queue 1029 supplies the computation instructions stored therein to the instruction queue 1030 in a pipeline manner. The computation instruction and the register numbers stored in the computation stage 1024 of the computation unit 1022 are supplied to a computation stage 1025. When the computation instruction and the register numbers are supplied from the computation stage 1024, the computation stage 1025 reads necessary data from the register file 1021, and attends to computation in accordance with the computation instruction.

Namely, when the computation stage 1025 receives the computation instruction and the register numbers, the results of computation will be obtained at the next cycle. When the results of computation are obtained, the computation stage 1025 checks whether there is a computation exception. If the computation has completed properly, the computation instruction is removed from the queue, and the results of computation are supplied from the computation unit 1022 to the register file 1021. If there is a computation exception, the computation instruction and information about the exception are stored in the computation stage 1025 and the instruction queue 1030, and an interruption operation is initiated.

In the case of a multi-cycle computation instruction, further computation will follow, so that the computation instruction and the information about the exception stored in the computation stage 1025 and the instruction queue 1030 are shifted to a computation stage 1026 and the instruction queue 1031, which are provided for the purpose of attending to a multi-cycle computation instruction. With respect to a computation instruction that can be detected at a beginning of computation such as division by zero, detection of an exception can be made in the same manner as for an ordinary pipelined computation instruction.

The computation instruction that is stored in the computation stage 1026 and in the instruction queue 1031 for multi-cycle computation instruction is checked again at the end of computation as to whether there is a computation exception. If there is no computation exception, the computation instruction is removed from the computation stage 1026 and the instruction queue 1031. If there is a computation exception, the computation instruction remains in the computation stage 1026 and the instruction queue 1031, and an interruption operation is initiated. The results of computation are stored in the register file 1021.

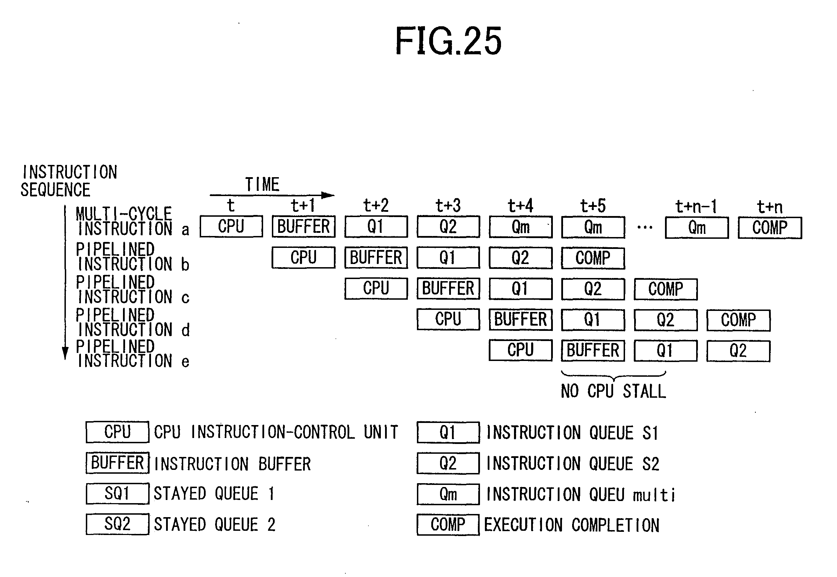

Fig.25 is a time chart showing an example of operation of the pipeline processing apparatus of Fig.24. Operation of the pipeline processing apparatus of Fig.24 will be described with reference to Fig.25. In Fig.25, portions that are not relevant are omitted. The time chart of Fig.25 shows a case in which computation instructions are successively executed in an order of a multi-cycle computation instruction a, a pipelined computation instruction b, a pipelined computation instruction c, a pipelined computation instruction d, and a pipelined computation instruction e.

At the time t, the multi-cycle computation instruction a is supplied from the instruction cache 1014 to the instruction-control unit 1013. At the time t+1, the instruction-control unit 1013 supplies the multi-cycle computation instruction a to the instruction buffer 1027. Further, the pipelined computation instruction b is provided from the instruction cache 1014 to the instruction-control unit 1013.

At the time t+2, the multi-cycle computation instruction a is supplied from the instruction buffer 1027 to the instruction queue 1029. The instruction-control unit 1013 provides the pipelined computation instruction b to the instruction buffer 1027. Further, the pipelined computation instruction c is delivered from the instruction cache 1014 to the instruction-control unit 1013.

At the time t+3, the multi-cycle computation instruction a is supplied from the instruction queue 1029 to the instruction queue 1030. The pipelined computation instruction b is provided from the instruction buffer 1027 to the instruction queue 1029. The instruction-control unit 1013 delivers the pipelined computation instruction c to the instruction buffer 1027. The pipelined computation instruction d is supplied from the instruction cache 1014 to the instruction-control unit 1013.

At the time t+4, the multi-cycle computation instruction a is supplied from the instruction queue 1030 to the instruction queue 1031 provided for the purpose of attending to multi-cycle computation instruction. The multi-cycle computation instruction b is supplied from the instruction queue 1029 to the instruction queue 1030. The pipelined computation instruction c is provided from the instruction buffer 1027 to the instruction queue 1029. The instruction-control unit 1013 delivers the pipelined computation instruction d to the instruction buffer 1027. The pipelined computation instruction e is supplied from the instruction cache 1014 to the instruction-control unit 1013.

At the time t+5, the multi-cycle computation instruction a remains in the instruction queue 1031. The pipelined computation instruction b comes to an end with respect to execution thereof, and removed from the queue. The pipelined computation instruction c is supplied from the instruction queue 1029 to the instruction queue 1030. The pipelined computation instruction d is provided from the instruction buffer 1027 to the instruction queue 1029. The instruction-control unit 1013 delivers the pipelined computation instruction e to the instruction buffer 1027.

In comparison with the time chart of Fig.23, no CPU stall condition takes place at the time t+5 in the time chart of Fig.25 whereas a CPU stall condition occurs at the t+5 in the time chart of Fig.24. The pipeline processing apparatus of the first embodiment according to the present invention allows a multi-cycle computation instruction to be shifted through the instruction queues 1029 and 1030 at similar timings to ordinary pipelined computation instructions, which makes it possible to process following pipelined instructions without creating stall conditions. This significantly improves the overall computation performance, and, at the same time, helps to reduce the number of instruction buffer stages provided for avoiding the stall conditions as much as possible.

Even during the execution of a multi-cycle computation instruction, a following computation instruction may trigger a computation exception. When such a computation exception takes place, the execution of the multi-cycle computation instruction may be brought to an end. At the time of detection of an exception in respect of a multi-cycle computation instruction or when an exception is detected with respect to a following computation instruction, the computation instruction, the register numbers, and the information about the exception may be stored in the instruction queue.

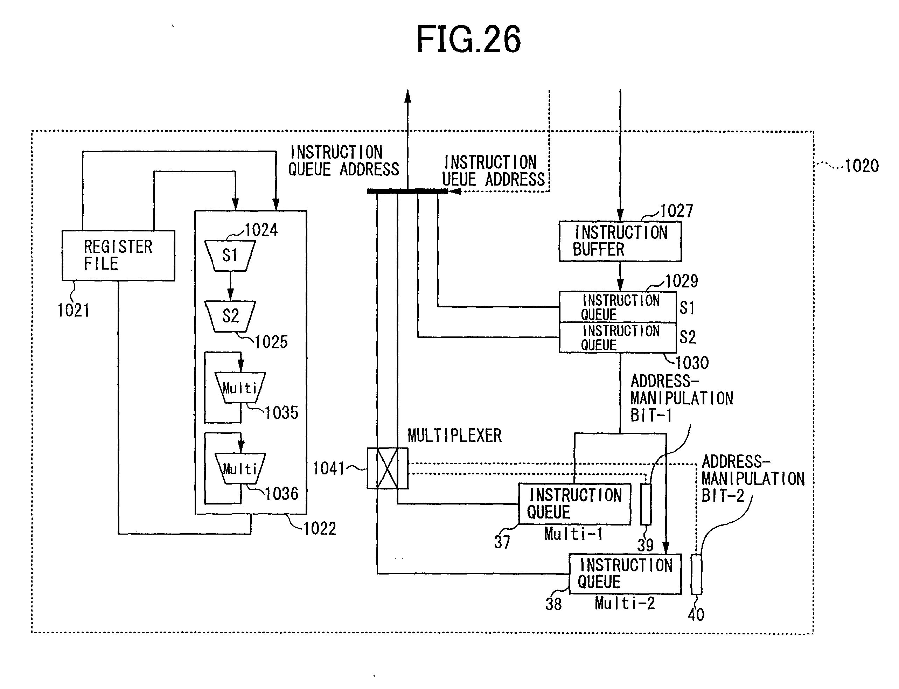

Fig.26 is a block diagram of a second embodiment of a pipeline processing apparatus according to the present invention. In Fig.26, only the COP 1020 of the pipeline processing apparatus is shown without illustration of the CPU 1010. Further, the same elements as those of Fig.24 are referred to by the same reference numbers, and a description thereof will be omitted.

The pipeline processing apparatus of Fig.26 includes instruction queues 1037 and 1038 and computation stages 1035 and 1036 for the purpose of attending to multi-cycle computation instructions. In this case, an order of instructions should be reported to an exterior of the apparatus with regard to the order of computation instructions stored in the instruction queues 1037 and 1038 and the computation stages 1035 and 1036. To this end, address-manipulation bits 1039 and 1040 are provided for the instruction queues 1037 and 1038, respectively, thereby explicitly indicating the order of issuance of instructions.

When two multi-cycle computation instructions a and b having different latencies are executed at the computation stages 1035 and 1036, the address-manipulation bits 1039 and 1040 are provided for the respective instruction queues 1037 and 1038 corresponding to the respective computation stages 1035 and 1036, and are used to indicate addresses of the instruction queues.

For example, the instruction queues 1037 and 1038 may be given addresses "000" and "001". When a multi-cycle computation instruction a is issued and stored in the dedicated instruction queue 1037, the address-manipulation bit 1039 is set to "1" if the address-manipulation bit 1040 of the other instruction queue 1038 has a bit "0" stored therein. On the other hand, the address-manipulation bit 1039 is set to "0" if the address-manipulation bit 1040 of the other instruction queue 1038 has a bit "1" stored therein.

When a multi-cycle computation instruction having the address-manipulation bit "1" is completed in terms of execution thereof, the address-manipulation bit is changed from "1" to "0", and, further, the address-manipulation bit of the other instruction queue is changed from "0" to "1". In this manner, among the two multi-cycle computation instructions a and b, the one that was issued first is stored in the multi-cycle-computation-instruction-purpose instruction queue having the address-manipulation bit "1". This makes it clear which one of the two multi-cycle computation instructions is issued first.

Moreover, rules about address assignment may be made in advance such that an address "000" is given to the instruction queue having the address-manipulation bit "1", and an address "001" is given to the instruction queue having the address-manipulation bit "0". In this address assignment, the contents of the instruction queues are read in an ascending order of addresses, with a result that multi-cycle computation instructions are read from the instruction queues in an order of issuance of instructions.

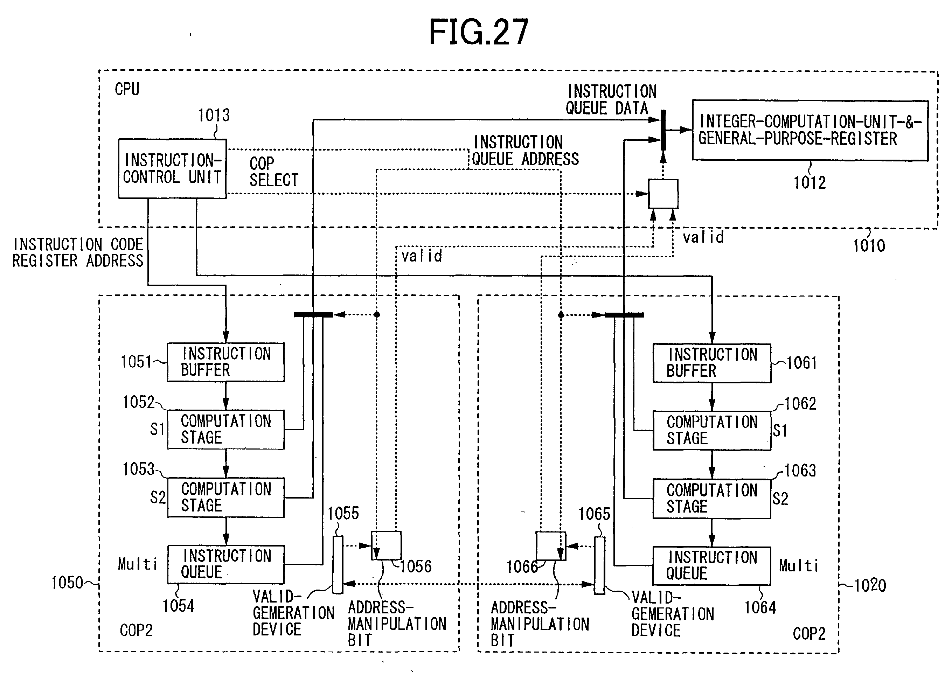

Fig.27 is a block diagram of a third embodiment of a pipeline processing apparatus according to the present invention. Fig.27 shows a pipeline processing apparatus having a plurality of COPs, and portions unnecessary for the purpose of explanation are omitted from the figure. Further, the same elements as those of Fig.24 are referred to by the same reference numerals, and a description thereof will be omitted.

The pipeline processing apparatus of Fig.27 includes two COPs 1050 and 1060, which are provided with instruction queues 1054 and 1064, respectively, for the purpose of attending to multi-cycle computation instructions. The instruction queues 1054 and 1064 for the purpose of attending to multi-cycle computation instructions are equipped with address-manipulation bits in the same manner as in the second embodiment.

In the configuration having a plurality of COPs in the pipeline processing apparatus as described above, the instruction queues 1054 and 1064 for multi-cycle computation instruction, which are provided in respective COPs, may be given multi-cycle computation instructions simultaneously. In this case, there is a need to determine, in advance, an order of priority in which values are set to address-manipulation bits of the instruction queues 1054 and 1064 as long as the multi-cycle computation instructions are supplied simultaneously to the instruction queues 1054 and 1064. This order of priority is determined by valid-generation devices 1056 and 1066. Other operation timings are the same as in the configuration that has a single COP provided with instruction queues for multi-cycle computation instructions, and a description thereof will be omitted.

As described above, the present invention can avoid a performance reduction regarding processing of instructions, and can cut down power consumption and cots by decreasing the number of instruction buffer stages.

### [THIRD PRINCIPLE]

In the following, embodiments of the present invention according to a third principle will be described with reference to accompanying drawings.

The present invention generally relates to a divider, and particularly relates to a recursive-type divider.

A divider is used to divide numbers, and includes a recursive-type divider and a non-recursive-type divider. The recursive-type divider obtains a quotient and a remainder by recursively obtaining a partial quotient and remainder for a portion of the number to be divided in the same manner as in dividing a number by a pencil and paper. The recursive-type divider may employ different base numbers, which define the number of bits that are treated as one unit in division computation.

For example, a divider that treats 3 bits as one unit to be divided has a base number of 8. A divider that treats 2 bits as one unit to be divided has a base number of 4. Further, a divider of a base number of 1 divides numbers by a unit of one bit. As the base number increases, the circuit structure becomes increasingly complex. The greater the base number, however, the higher computation speed is achieved because a larger number of bits are computed at a time. Choice of the base number is a matter of case by case.

Since recursive-type dividers repeat division computations many times, division computation at each cycle needs to be fast in order to avoid a lengthy computation time of the entire division computation.

Accordingly, there is a need for a recursive-type divider having a base number 4 which achieves high-speed division computation.

Accordingly, it is a general object of the present invention to provide a divider which substantially obviates one or more of the problems caused by the limitations and disadvantages of the related art.

In order to achieve the above object of the present invention, a divider includes a carry save adder, and a full adder connected in series with the carry save adder, wherein the series connection of the carry save adder and the full adder performs an addition computation necessary for division computation.

According to another aspect of the present invention, the divider as described above is a recursive-type divider.

According to another aspect of the present invention, the divider as described above is such that the series connection of the carry save adder and the full adder obtains a sum of a portion of a dividend, a divider, and double the divider.

According to another aspect of the present invention, the divider as described above is a recursive-type divider of a base number equal to four.

In the divider as described above, an addition computation necessary during division computation is carried out by use of the carry save adder and the full adder connected in series. The carry save adder outputs carry bits of respective bit stages without carrying them over to the adjacent higher bits. Unlike an ordinary full adder, the carry save adder does not have to make a carry propagate from the least significant bit to the most significant bit, thereby achieving high-speed summation computation. This can reduce the computation time required for each division cycle that is repeated many times in the recursive-type divider.

In the following, embodiments of the present invention will be described with reference to the accompanying drawings.

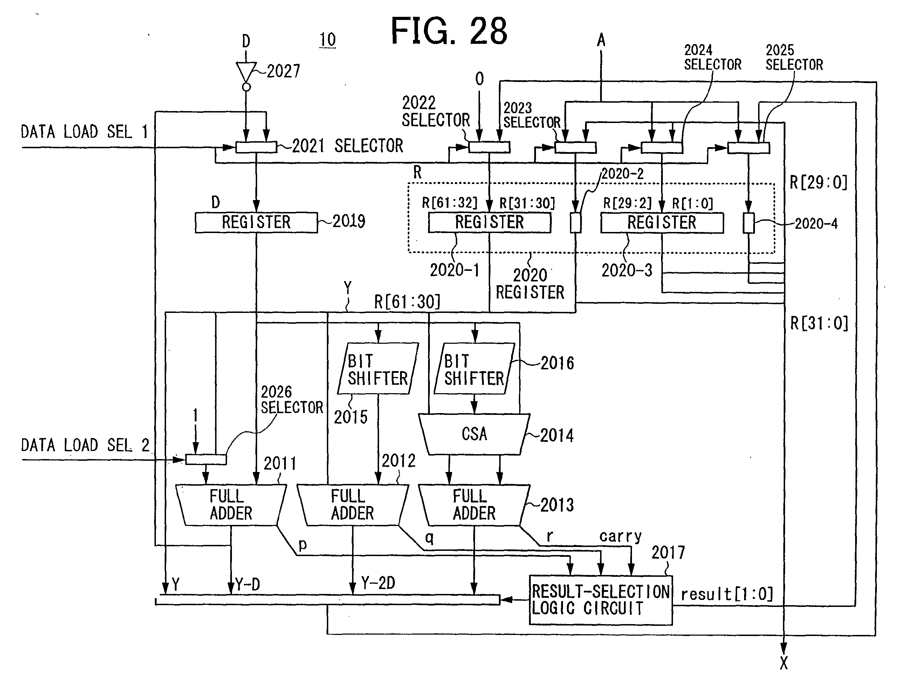

Fig.28 is a block diagram of a recursive-type divider of the base number 4. A divider 2010 of Fig.28 includes full adders 2011 through 2013, a carry save adder 2014, bit shifters 2015 and 2016, a result-selection logic circuit 2017, a selector 2018, registers 2019 and 2020, selectors 2021 through 2026, and an inverter 2027. The divider 2010 of Fig.28 divides a 32-bit integer A by a 32-bit integer D to obtain a 32-bit quotient X wherein all these numbers have no plus/minus signs attached thereto.

The register 2020 includes four registers 2020-1 through 2020-4, which together form a 64-bit register. In the register 2020, a partial remainder R is stored as it is obtained through 2-bit-by-2-bit division of the number A (dividend) to be divided, and the result (quotient) of 2-bit-by-2-bit computation is successively stored from lower bits toward upper bits. In Fig.28, for example, the register 2020-1 is denoted as R[61,32], which indicates that the register 2020-1 corresponds to the 33^{rd} bit through the 62^{nd} bit of the register 2020 when bits are counted in an order from the least significant bit.

The divider 2010 of Fig.28 employs the carry save adder 2014. Use of the carry save adder 2014 makes it possible to achieve high-speed division computation.

In what follows, operation of the divider 2010 will be outlined first.

The dividend A is stored in the 32 lower bits of the register 2020 via the selector 2023 through 2025. At this time, the register 2020-1 has zeros stored in all the bits thereof. The divisor D is stored in the register 2019 as a bit-wise-inverted value via the bit-wise inverter 2027 and the selector 2021. The bit-wise-inverted value stored in the register 2019 is then added to a value "1" by the full adder 2011 as the value "1" is selected by the selector 2026, and the result of addition is stored in the register 2019. As a result, the register 2019 ends up storing an opposite sign value -D having an opposite sign to the divisor D.

Subsequently, a division block divides the two most significant bits of the dividend A by the divisor D to obtain a quotient and a remainder where the division block is comprised of the full adders 2011 through 2013, the carry save adder 2014, the bit shifter 2015 and 2016, and the result-selection logic circuit 2017. Namely, the contents R[61:30] of the register 2020 are read from the register 2020, so that the two most significant bits (bit 31 and bit 30) of the dividend A stored as R[31:0] are supplied to the division block. This number supplied to the division block will be hereinafter referred to as Y.

The result-selection logic circuit 2017 selects the rightmost item that is not negative among Y, Y-D, Y-2D, and Y-3D. This selection is made by checking each of the most significant bits (p, q, r) of the results of respective computations Y-D, Y-2D, and Y-3D. Here, the most significant bits p, q, and r are 1 if the corresponding computation results are negative. For example, if Y is greater than D but smaller than 2D, Y and Y-D are positive, and Y-2D and Y-3D are negative. In this case, a selection signal from the result-selection logic circuit 2017 prompts the selector 2018 to select Y-D. The selected result is a remainder that is left after dividing the two most significant bits of the dividend A by the divisor D, and is stored in the register 2020 as R[61:32].

When this happens, the 30 lower bits of the register 2020 is shifted to the left by 2 bits, so that the 30 lower bits of the dividend A originally stored in R[29:0] is shifted and stored in R[31:2]. Since the remainder Y-D is stored in R[61:32] of the register 2020 as described above, the two most significant bits of the dividend A are replaced by the remainder Y-D, and the contents of R[33:2] represent the entirety of the partial remainder. Namely, R[33:2] stores the partial remainder obtained after dividing the two most significant bits of the dividend A by the divisor D.

For the sake of simplicity of explanation, a description will now be given by referring to an example of decimal numbers, which are more familiar to most people. In division computation "564/3", for example, a quotient "1" is obtained first by division computation "5/3" directed to the first digit "5", and a remainder in this case is 2. In the description provided above, Y corresponds to 5, and D corresponds to 3. Since 5 is larger than 3, and is smaller than two times 3, Y-D that is 2 is selected as a remainder, and is stored in the register 2020. When this is done, the first digit of 564 is replaced by the remainder "2" obtained for this digit, resulting in the partial remainder 264. This result is the same as the remainder of computation that divides 564 by 300.

Since the base number of the decimal computation is 10, division of one digit in the decimal-computation example as described above corresponds to division of 2 bits in the example of the base number 4. In the case of decimal numbers, Y-D through Y-9D would need to be calculated. Since the base number is 4 in the configuration of Fig.28, computation of Y-D through Y-3D is all that is necessary.

With reference to Fig.1 again, the result-selection logic circuit 2017 selects one of Y, Y-D, Y-2D, and Y-3D, and obtains a value (result[1:0]) that corresponds the quotient. The obtained quotient is stored in the two least significant bits of the register 2020. When Y-D is selected, for example, the result-selection logic circuit 2017 outputs 1 ("01" in binary representation), which is stored in R[1:0] of the register 2020. The result stored in the register 2020 is successively shifted to the left by 2 bits each time a division computation is performed.

After this, computations are repeated. Namely, the four most significant bits of the partial remainder stored in the register 2020 are supplied to the division block, which is comprised of the full adders 2011 through 2013, the carry save adder 2014, the bit shifters 2015 and 2016, and the result-selection logic circuit 2017. This data supplied to the division block is designated as Y, and the control of computation is attended to in the same manner as described above.

Although the supplied data is comprised of the four most significant bits, the two upper bits of the four bits are the remainder of the previous division computation. In no case, will a quotient for these four bits be larger than three. In the example of the decimal numbers described above, the two upper digits "26" of the partial remainder "264", the one upper bit "2" is a remainder of the previous division computation, so that the quotient obtained by dividing 26 by 3 cannot be larger than 9.

In this manner, the two uppermost bits among the bits that have not yet been subjected to division computation are selected as a subject of new division computation from the partial remainder stored in the register 2020, and the most significant bits including these two bits are supplied to the division block, which then obtains a quotient and a remainder. (The division block is comprised of the full adders 2011 through 2013, the carry save adder 2014, the bit shifters 2015 and 2016, and the result-selection logic circuit 2017.) The obtained quotient and the remainder are stored in the register 2020, and the partial remainder is further used for the subsequent division computation. When processing of all the bits of the dividend A is completed, R[31:0] of the register 2020 stores therein the quotient X as a final result of the division computation.

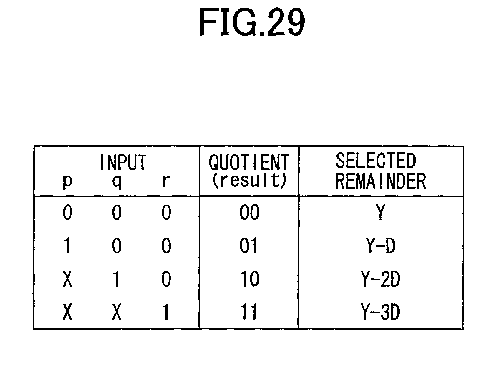

In order to achieve the operation as described above, the full adder 2011 adds -D supplied from the register 2019 to Y selected by the selector 2026. The full adder 2012 adds -2D to Y supplied from the register 2020 as this value -2D is obtained by the bit shifter 2015 shifting -D supplied from the register 2019 by one bit. The carry save adder 2014 and the full adder 2013 add Y, -D, and -2D together when Y is supplied from the register 2020, -D is directly supplied from the register 2019, and -2D is supplied from the bit shifter 2016 shifting -D obtained from the register 2019 by one bit. The result-selection logic circuit 2017 attends to logic computation as shown in Fig.29, thereby selecting a proper remainder and supplying a quotient to the register 2020.

The outputs of the register 2020-3 and the register 2020-4 are supplied to the registers 2020-2 and 2020-3 as inputs thereto via the selectors 2023 and 2024, respectively. This operation shifts the contents of the register to the left by 2 bits each time a division computation is performed for two bits.

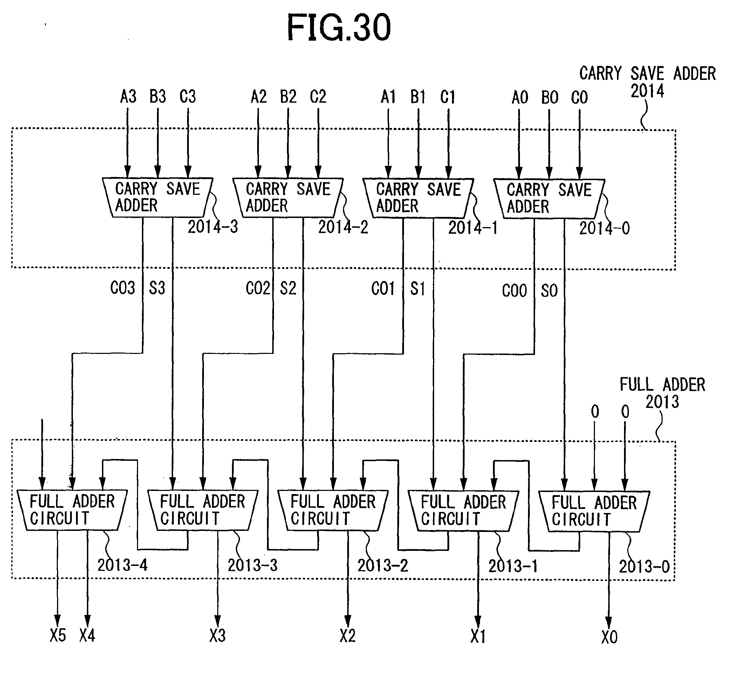

Fig.30 is a circuit diagram showing a circuit configuration of the carry save adder 2014 along with a circuit configuration of the full adder 2013. The carry save adder 2014 shown in Fig.30 is directed to four-bit computation for the purpose of simplifying explanation and the drawing.

The carry save adder 2014 of Fig.30 includes full-adder circuits 2014-0 through 2014-3 each for one bit computation. The full-adder circuits 2014-0 through 2014-3 are arranged to correspond to respective bits. In the case of an ordinary full adder, a full-adder circuit for a given bit has a carry output thereof supplied to an input of an adjacent full-adder circuit that is provided for the higher adjacent bit. In this manner, each full-adder circuit obtains a sum of two inputs and a carry output that is supplied from the lower adjacent bit. Differing from such an ordinary full adder, the carry save adder simply outputs carry bits of the full-adder circuits without supplying them to the adjacent higher bits.

As was described with reference to Fig.28, the carry save adder 2014 receives -D from the register 2019, -2D from the bit shifter 2016, and Y from the register 2020. In Fig.30, each bit of these three inputs is referred to as An, Bn, and Cn (n=0, 1, 2, 3). The outputs of the full-adder circuit 2014-n are shown as Sn and Con (n=0, 1, 2, 3).

Each of the full-adder circuits 2014-0 through 2014-3 obtains a sum of the three one-bit inputs by carrying out an ordinary addition operation, and supplies a two-bit output. That is, the output COnSn having COn as the upper bit and Sn as the lower bit is a sum of the three one-bit inputs An, Bn, and Cn.

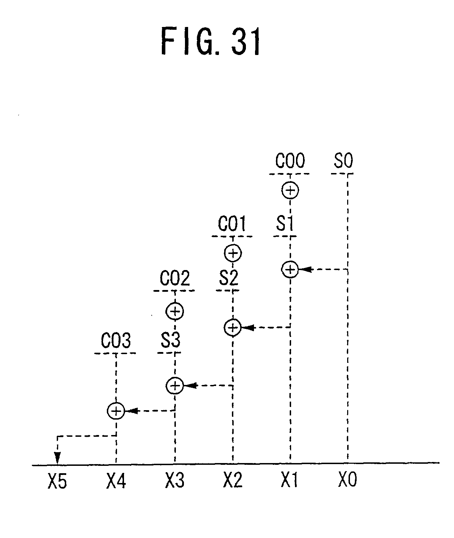

The full adder 2013 includes full-adder circuits 2013-0 through 2013-4 provided for respective bits. The full-adder circuit 2013-0 for the least significant bit obtains a sum of "0", "0", and S0. That is, the full-adder circuit 2013-0 outputs S0 without any change. The full-adder circuit 2013-n other than the full-adder circuit 2013-0 obtains a sum of Sn that is a summation output of the carry save adder 2014 for a corresponding bit, COn-1 that is a carry output of the carry save adder 2014 for the adjacent lower bit, and a carry output of the full-adder circuit 2013-n-1 for the adjacent lower bit. Fig.31 is an illustrative drawing for explaining the operation of the full-adder circuits with reference to computation based on paper and a pencil. As shown in Fig.31, the operation of the full-adder circuits is the same as obtaining a total sum by aligning all the summation results at proper bit positions. Outputs X0 through X5 obtained as a result of this operation are a correct sum of the three inputs that are supplied to the carry save adder 2014.

In this manner, the combination of the carry save adder 2014 and the full adder 2013 can properly produce a sum of the three inputs.

A conventional method of obtaining three numbers A, B, and C is to obtain a sum of A and B by a first full adder and to obtain a sum of the output of the first full adder and C by use of a second full adder. In a conventional recursive-type divider, two full adders are connected in series to compute Y-3D. Since a full adder needs to have a carry output propagating from a full-adder circuit to an adjacent full adder circuit, it takes a lengthy time for the carry output to successively propagate from the least significant bit to the most significant bit. The larger the number of computation bits, the longer the time length before any results of computation are obtained.

Use of the carry save adder eliminates a need for carry propagation inside the carry save adder. Because of this, the series connection of the carry save adder with the full adder achieves high-speed summation operation.

With reference to Fig.28, if a full adder is used in place of the carry save adder 2014, the full adders are connected in series to form two computation stages. This results in computation of Y-3D being delayed relative to the computations of Y-D and Y-2D. In the configuration of Fig.28, use of the carry save adder 2014 removes a time delay that would be required for carry propagation, thereby achieving high-speed computation of Y-3D. As a result, the computation of Y-3D can be completed almost simultaneously with the computations of Y-D and Y-2D.

In this manner, the recursive-type divider of the base number 4 according to the present invention employs a carry save adder for addition computation so as to achieve fast computation of each division cycle.

Further, the present invention is not limited to these embodiments, but various variations and modifications may be made without departing from the scope of the present invention.

According to the divider as described above, an addition computation necessary during division computation is carried out by use of a carry save adder and a full adder connected in series. The carry save adder outputs carry bits of respective bit stages without carrying them over to the adjacent higher bits. Unlike an ordinary full adder, the carry save adder does not have to make a carry propagate from the least significant bit to the most significant bit, thereby achieving high-speed summation computation. This can reduce the computation time required for each division cycle that is repeated many times in the recursive-type divider.

The present application is based on Japanese priority applications No. 2000-099707 filed on March 31, 2000, No. 2000-054832 filed on February 29, 2000, No. 2000-054742 filed on February 29, 2000, with the Japanese Patent Office, the entire contents of which are hereby incorporated by reference.

## Claims

1. A computer which performs parallel processing of a plurality of programs in a time-division fashion, comprising:
hardware resources divided into a plurality of areas;
an evacuation unit which records identification information identifying a first program, and evacuates information stored in an area of said plurality of areas if the area is necessary for execution of a second program and is being used for execution of the first program; and
a restoration unit which restores the evacuated information to the area based on the identification information when the second program comes to a halt or to an end.

2. The computer as claimed in claim 1, further comprising an interruption unit which brings about interruption processing if the area is necessary for execution of a second program and is being used for execution of the first program, wherein said evacuation unit operates as part of the interruption processing to record the identification information and to evacuate the information stored in the area.

3. A computer which performs parallel processing of a plurality of programs in a time-division fashion, comprising:
hardware resources divided into a plurality of areas;
an evacuation unit which records identification information identifying a first program, and evacuates information stored in a first area of said plurality of areas if the first area and a second area of said plurality of areas are necessary for execution of a second program and are being used for execution of the first program, said evacuation unit subsequently evacuating information stored in the second area when use of the second area becomes actually necessary for execution of the second program; and
a restoration unit which restores the evacuated information to the first and second areas based on the identification information when the second program comes to a halt or to an end.

4. A method of controlling a computer which performs parallel processing of a plurality of programs in a time-division fashion, comprising the steps of:
providing hardware resources divided into a plurality of areas;
recording identification information identifying a first program, and evacuating information stored in an area of said plurality of areas if the area is necessary for execution of a second program and is being used for execution of the first program; and
restoring the evacuated information to the area based on the identification information when the second program comes to a halt or to an end.

5. A method of controlling a computer which performs parallel processing of a plurality of programs in a time-division fashion, comprising the steps of:
providing hardware resources divided into a plurality of areas;
recording identification information identifying a first program, and evacuating information stored in a first area of said plurality of areas if the first area and a second area of said plurality of areas are necessary for execution of a second program and are being used for execution of the first program, followed by subsequently evacuating information stored in the second area when use of the second area becomes actually necessary for execution of the second program; and
restoring the evacuated information to the first and second areas based on the identification information when the second program comes to a halt or to an end.

6. A method of pipeline processing that attends to computation by connecting a central processing unit to an additional computation unit, comprising the steps of:
storing a computation instruction supplied to the computation unit;
executing the stored computation instruction, and checking if completing the execution of the computation instruction requires more than a predetermined time length;
shifting the stored computation instruction to a dedicated storage if completing the execution of the computation instruction requires more than the predetermined time length; and
executing the computation instruction stored in the dedicated storage until the execution of the computation instruction is completed.

7. The method as claimed in claim 6, further comprising a step of successively outputting results of the execution of the computation instruction if the computation instruction is not an instruction requiring more than the predetermined time length in order to complete the execution.

8. An apparatus for pipeline processing in which a central processing unit is connected to an additional computation unit to attend to computation, comprising:
a first storage unit storing a computation instruction supplied to the computation unit;
a first computation unit which executes the computation instruction stored in said first storage unit;
a second storage unit which stores the computation instruction executed by the first computation unit if completing the execution of the computation instruction requires more than a predetermined time length; and
a second computation unit which executes the computation instruction stored in the second storage unit until the execution of the computation instruction is completed.

9. An apparatus for pipeline processing in which a central processing unit is connected to an additional computation unit to attend to computation, comprising:
a first storage unit storing a computation instruction supplied to the computation unit;
a first computation unit which executes the computation instruction stored in said first storage unit;
second storage units, one of which stores the computation instruction executed by the first computation unit if completing the execution of the computation instruction requires more than a predetermined time length;
an indication unit which indicates an order of issuance of computation instructions stored in said second storage units; and
a second computation unit which executes a first-issued instruction among the computation instructions stored in said second storage units by selecting the first-issued instruction based on an indication of said indication unit until the execution of the first-issued instruction is completed.

10. An apparatus for pipeline processing in which a central processing unit is connected to a plurality of additional computation units to attend to computation, comprising:
a first storage unit which is provided in each of the computation units, and stores a computation instruction supplied to each of the computation units;
a first computation unit which is provided in each of the computation units, and executes the computation instruction stored in said first storage unit;
second storage units, each of which is provided in a corresponding one of the computation units, and stores the computation instruction executed by the first computation unit if completing the execution of the computation instruction requires more than a predetermined time length;
an indication unit which stores values indicative of an order of issuance of computation instructions stored in said second storage units; and
a second computation unit which executes a first-issued instruction among the computation instructions stored in said second storage units by selecting the first-issued instruction based on an indication of said indication unit until the execution of the first-issued instruction is completed, wherein an order of priority is determined in advance such that the values are stored in said indication unit in said order of priority.

11. The apparatus as claimed in claim 8, wherein a computation instruction requiring more than the predetermined time length for execution thereof is a multi-cycle computation instruction that requires a plurality of cycles before completion of execution thereof.

12. The apparatus as claimed in claim 9, wherein a computation instruction requiring more than the predetermined time length for execution thereof is a multi-cycle computation instruction that requires a plurality of cycles before completion of execution thereof.

13. The apparatus as claimed in claim 10, wherein a computation instruction requiring more than the predetermined time length for execution thereof is a multi-cycle computation instruction that requires a plurality of cycles before completion of execution thereof.

14. A divider, comprising:
a carry save adder; and
a full adder connected in series with said carry save adder, wherein the series connection of said carry save adder and said full adder performs an addition computation necessary for division computation.

15. The divider as claimed in claim 14, wherein said divider is a recursive-type divider.

16. The divider as claimed in claim 15, wherein the series connection of said carry save adder and said full adder obtains a sum of a portion of a dividend, a divider, and double the divider.

17. The divider as claimed in claim 16, wherein said divider is a recursive-type divider of a base number equal to four.
